# EUROPEAN PATENT APPLICATION

(11) **EP 4 401 400 A1**
(43) Date of publication of application: **17.07.2024**
(21) Application number: 21956811.0
(22) Date of filing: 10.09.2021
(51) Int. Cl.: H04N 7/15, G06F 16/00, G06F 21/62

(54) **WEB CONFERENCE SYSTEM, TERMINAL DEVICE, AND WEB CONFERENCE METHOD**

(71) Applicant: Maxell, Ltd., Kyoto 618-8525 (JP)
(72) Inventor: ESAKA, Fumiaki, Otokuni-gun, Kyoto 618-8525 (JP); YOSHIZAWA, Kazuhiko, Otokuni-gun, Kyoto 618-8525 (JP); HIRABAYASHI, Tomonori, Otokuni-gun, Kyoto 618-8525 (JP)
(74) Representative: Mewburn Ellis LLP
(86) International application number: PCT/JP2021/033412
(87) International publication number: WO 2023/037514

(57) **Abstract**

A WEB conference system of this disclosure includes a server and a plurality of terminal apparatuses connected to the server, and the server includes a retention device configured to acquire device type information indicating types of audio output devices being used in the terminal apparatuses from the plurality of terminal apparatuses and retain the device type information and a control device configured to determine whether or not audio is output from the audio output device being used in each terminal apparatus or control a volume output from the terminal apparatus based on the device type information for each terminal apparatus retained in the retention device. For example, the control device determines a terminal apparatus whose type of the audio output device being used is a headphone type as a transmission destination of audio data.

## Description

### TECHNICAL FIELD

The present invention relates to a WEB conference system, a terminal apparatus, and a WEB conference method.

### BACKGROUND ART

Conventionally, various techniques related to management of a WEB conference have been disclosed. For example, a technique of displaying information indicating who is an utterer on a screen in a WEB conference system is disclosed (Patent Document 1 or the like).

### RELATED ART DOCUMENTS

### PATENT DOCUMENTS

Patent Document 1: Japanese Unexamined Patent Application Publication No. 2003-339034

### SUMMARY OF THE INVENTION

### PROBLEMS TO BE SOLVED BY THE INVENTION

In recent years, the number of workers who work remotely has been increasing, and opportunities to use WEB conferences have also been increasing. The WEB conference is convenient in a high degree of freedom regarding the environment where the conference is held, but has a high risk of leakage of confidential information. For example, in a case where a participant of the WEB conference installs a terminal apparatus outside a private room and causes a speaker of the terminal apparatus to output audio, there is a possibility that the audio is heard by an unintended person around the terminal apparatus and confidential information is leaked.

Under such circumstances, it is desired to provide a technique capable of reducing the risk of leaking confidential information in the WEB conference.

### MEANS FOR SOLVING THE PROBLEMS

An outline of a typical invention among those disclosed in this application will be briefly described as follows.

A WEB conference system according to a typical embodiment includes a server and a plurality of terminal apparatuses connected to the server. The server includes a retention device configured to acquire device type information indicating types of audio output devices being used in the terminal apparatuses from the plurality of terminal apparatuses and retain the device type information and a control device configured to determine whether or not audio is output from the audio output device being used in each terminal apparatus or control a volume output from the terminal apparatus based on the device type information for each terminal apparatus retained in the retention device. Features of the other embodiments will be understood from contents described in each claim.

### EFFECTS OF THE INVENTION

According to the typical embodiment, it is possible to reduce the risk of leaking confidential information in the WEB conference.

### BRIEF DESCRIPTION OF THE DRAWINGS

FIG. 1 is a diagram illustrating a configuration of a WEB conference system according to a first embodiment.
FIG. 2 is a diagram illustrating a hardware configuration of a WEB conference server.
FIG. 3 is a diagram illustrating a hardware configuration of a terminal apparatus.
FIG. 4 is a diagram illustrating a configuration of functional blocks of the WEB conference server.
FIG. 5 is a diagram schematically illustrating a conference management table according to the first embodiment.
FIG. 6 is a diagram schematically illustrating a participant management table according to the first embodiment.
FIG. 7 is a diagram illustrating a table for describing a determination method of a transmission destination of audio data.
FIG. 8 is a diagram illustrating a configuration of functional blocks of the terminal apparatus.
FIG. 9 is a diagram schematically illustrating an input and output device management table.
FIG. 10 is a diagram schematically illustrating an example of a display screen of the terminal apparatus.
FIG. 11 is a diagram schematically illustrating an example of a screen on which a text is displayed.
FIG. 12 is a diagram schematically illustrating an example of the screen on which the text is displayed.
FIG. 13 is a diagram illustrating an outline of a process flow of the WEB conference system according to the first embodiment.
FIG. 14 is a diagram illustrating an example of a flow of device management table creation process.
FIG. 15 is a diagram illustrating an example of a flow of conference reservation process.
FIG. 16 is a diagram illustrating an example of a flow of conference start process.
FIG. 17 is a diagram illustrating an example of a flow of participating/leaving process.
FIG. 18 is a diagram illustrating an example of a flow of audio output device management process.
FIG. 19 is a diagram illustrating an example of a flow of individual security type setting management process.
FIG. 20 is a diagram illustrating an example of a flow of video and audio distribution process.
FIG. 21 is a diagram illustrating an example of a flow of conference continuation end determination process.
FIG. 22 is a diagram schematically illustrating a conference management table according to a second embodiment.
FIG. 23 is a diagram schematically illustrating a participant management table according to the second embodiment.
FIG. 24 is a diagram illustrating a table for describing a determination method of a transmission destination of audio data.
FIG. 25 is a diagram illustrating an example of a flow of video and audio distribution process according to a third embodiment.
FIG. 26 is a diagram illustrating a table for describing a determination method of a target of volume reduction control.

### DETAILED DESCRIPTION OF PREFERRED EMBODIMENTS

Hereinafter, embodiments will be described. Note that the embodiments are examples for implementing the present invention, and do not limit the technical scope of the present invention.

In addition, in the following embodiments, components having the same function are denoted by the same reference characters, and the repetitive description thereof will be omitted unless particularly necessary.

### (First embodiment)

A WEB conference system according to a first embodiment will be described.

### <Outline of WEB conference system according to first embodiment>

In the WEB conference system according to the first embodiment, device type information indicating the type of audio output device being used in a terminal apparatus is acquired from each of a plurality of terminal apparatuses and retained, and it is determined whether or not to output audio from the audio output device being used in each terminal apparatus based on the retained device type information for each terminal apparatus.

In addition, in the WEB conference system according to the first embodiment, a terminal apparatus to be a transmission destination of audio data of an utterer is determined based on the device type information for each terminal apparatus.

### <Hardware configuration of WEB conference system>

A configuration of the WEB conference system according to the first embodiment will be described.

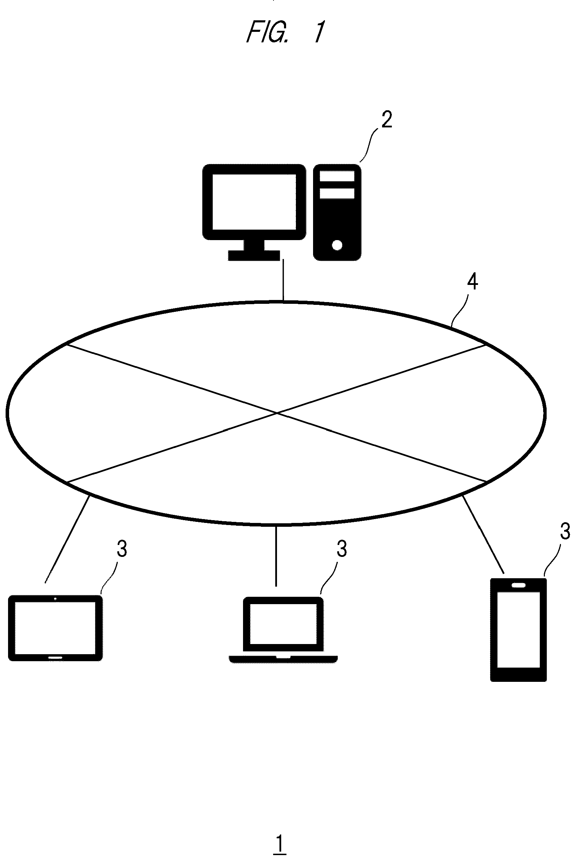

FIG. 1 is a diagram illustrating the configuration of the WEB conference system according to the first embodiment. As illustrated in FIG. 1, a WEB conference system 1 according to the first embodiment includes a WEB conference server 2 and a plurality of terminal apparatuses 3. The WEB conference server 2 and the plurality of terminal apparatuses 3 are connected via a network 4, and execute various kinds of processes in cooperation while performing server-client communication. The connection to the network 4 may be wired or wireless. Note that the WEB conference server 2 is an example of a server according to the present invention. In addition, the plurality of terminal apparatuses 3 are examples of a plurality of terminal apparatuses according to the present invention.

The WEB conference server 2 is a computer server that executes various kinds of processes necessary for holding a WEB conference. The plurality of terminal apparatuses 3 are terminal apparatuses used by a plurality of participants who participate in the WEB conference. The plurality of participants include a host and participants other than the host. The terminal apparatus 3 is, for example, a desktop personal computer, a notebook personal computer, an information processing terminal, or the like. The information processing terminal is, for example, a smartphone, a tablet terminal, or the like. The network 4 is a wide area communication network, for example, the Internet.

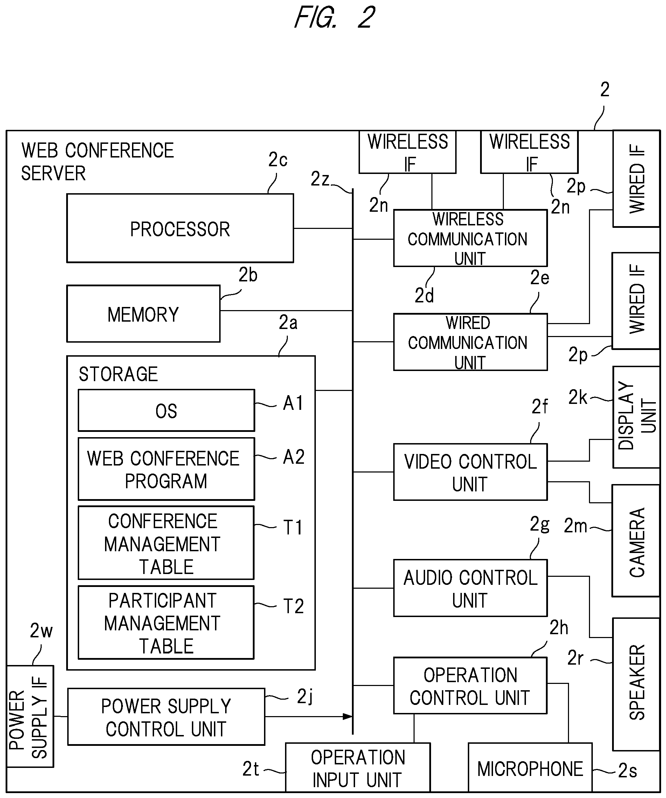

FIG. 2 is a diagram illustrating a hardware configuration of the WEB conference server. As illustrated in FIG. 2, the WEB conference server 2 includes a storage 2a, a memory 2b, a processor 2c, a wireless communication unit 2d, a wired communication unit 2e, a video control unit 2f, an audio control unit 2g, an operation control unit 2h, a power supply control unit 2j, a display unit 2k, a camera 2m, a wireless interface (in FIG. 2, "interface" is denoted as "IF" for the sake of convenience) 2n, a wired interface 2p, a speaker 2r, a microphone 2s, an operation input unit 2t, and a power supply interface 2w. The WEB conference server 2 further includes a communication bus 2z. The storage 2a to the power supply control unit 2j constituting the WEB conference server 2 are connected via the communication bus 2z, and can communicate with each other.

The storage 2a stores various programs and various kinds of data. The various programs include, for example, an operating system (hereinafter, referred to also as OS) A1, a WEB conference program (hereinafter, referred to also as a WEB conference application) A2, a device driver, and the like. The various kinds of data include, for example, a conference management table T1 for managing a WEB conference, a participant management table T2 for managing the participants, and the like. The storage 2a is a nonvolatile memory, and is composed of, for example, a SSD (Solid State Drive), a HDD (Hard Disk Drive), an eMMC (embedded Multi Media Card), a UFS (Universal Flash Storage), a SD (Secure Digital) card, a USB (Universal Serial Bus) flash drive, an optical disk, or the like.

The memory 2b temporarily stores data to be processed by the processor 2c. The memory 2b is composed of, for example, a semiconductor memory represented by a RAM (Random Access Memory). Note that the memory 2b may be shared by the storage 2a.

The processor 2c performs various kinds of calculation processing or various kinds of data processing. The processor 2c functions as various functional blocks by executing the programs stored in the storage 2a by using the memory 2b or the like. The processor 2c is composed of, for example, a MPU (Micro-Processing Unit), a CPU (Central Processing Unit), or the like. Note that the processor 2c may control the control units.

The wireless communication unit 2d is connected to the wireless interface 2n. The wireless communication unit 2d converts data into an electrical signal to output the electrical signal to the wireless interface 2n or converts an electrical signal received by the wireless interface 2n into data. The wireless communication unit 2d is connected to communicate with an external device or an access point of the network 4 via the wireless interface 2n. The wireless communication unit 2d and the wireless interface 2n are compatible with, for example, a standard such as Wi-Fi (registered trademark) or Bluetooth (registered trademark).

The wired communication unit 2e is connected to the wired interface 2p. The wired communication unit 2e converts data into an electrical signal to output the electrical signal to the wired interface 2p or converts an electrical signal received by the wired interface 2p into data. The wired communication unit 2e is connected to communicate with an external device via the wired interface 2p.

The wired interface 2p is, for example, a USB terminal, a LAN terminal, or a three-terminal or four-terminal phone jack. The LAN terminal is compatible with, for example, a standard such as 1000BASE-T, 100BASE-TX, or 10BASE-T. The phone jack is compatible with, for example, an OMTP (Open Mobile Terminal Platform) standard, a CTIA (Cellular Telephone Industry Association) standard, or the like.

The video control unit 2f is connected to the display unit 2k and the camera 2m. The video control unit 2f converts video data or image data into an electrical signal to output the electrical signal to the display unit 2k or converts an electrical signal received by the camera 2m into video data or image data.

The display unit 2k displays an image, text information, or the like on a display screen. The display unit 2k is composed of, for example, a liquid crystal display, an organic EL (Electro-Luminescence) display, a display with a touch panel, or the like. The camera 2m captures an image of an operator of the WEB conference server 2.

The audio control unit 2g is connected to the speaker 2r and the microphone 2s built in the WEB conference server 2. The audio control unit 2g converts audio data into an electrical signal to output the electrical signal to the speaker 2r or converts an electrical signal generated by the microphone 2s into audio data.

Note that, in a case where a headphone, a headset, a speaker, a microphone, or the like is connected to the wireless interface 2n or the wired interface 2p, the audio control unit 2g processes the audio data in cooperation with the wireless communication unit 2d or the wired communication unit 2e. For example, the audio control unit 2g transmits the audio data to the wireless communication unit 2d or the wired communication unit 2e, and the wireless communication unit 2d or the wired communication unit 2e causes the connected headphone, headset, speaker, or the like to output audio based on the received audio data. Also, for example, the wireless communication unit 2d or the wired communication unit 2e converts an electrical signal indicating audio picked up by the connected headset or microphone into audio data and transmits the audio data to the audio control unit 2g, and the audio control unit 2g processes the received audio data.

The operation control unit 2h is connected to the operation input unit 2t. The operation control unit 2h receives an operation signal input by the operation input unit 2t, converts the operation signal into operation data, and processes the operation data. The operation input unit 2t is, for example, a keyboard, a mouse, a touch pad, a touch panel, or the like.

Note that, in a case where a keyboard, a mouse, a touch pad, a touch panel, or the like is connected to the wireless interface 2n or the wired interface 2p, the operation control unit 2h processes the operation data in cooperation with the wireless communication unit 2d or the wired communication unit 2e. For example, the wireless communication unit 2d or the wired communication unit 2e converts an electric signal indicating an operation received by the connected keyboard, mouse, touch pad, touch panel, or the like into operation data and transmits the operation data to the operation control unit 2h, and the operation control unit 2h processes the received operation data.

The power supply control unit 2j is connected to the power supply interface 2w. The power supply interface 2w is, for example, an inlet, that is, a power supply plug. For example, power is supplied to the power supply control unit 2j by connecting the inlet to an outlet that outputs AC 100 V to 240 V, that is, a power socket. The power supply control unit 2j converts the supplied power into DC, and distributes DC to the units constituting the WEB conference server 2.

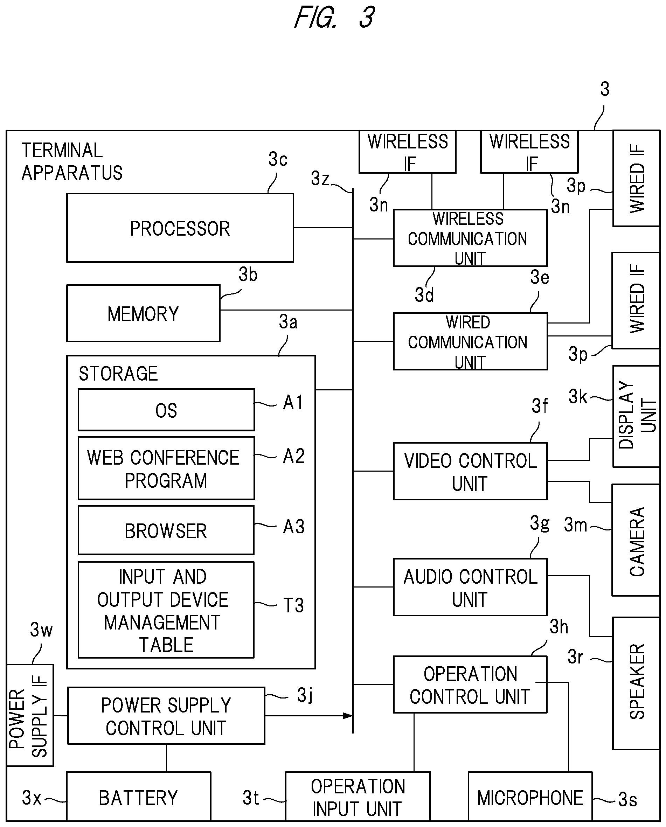

FIG. 3 is a diagram illustrating a hardware configuration of the terminal apparatus. As illustrated in FIG. 3, the terminal apparatus 3 includes a storage 3a, a memory 3b, a processor 3c, a wireless communication unit 3d, a wired communication unit 3e, a video control unit 3f, an audio control unit 3g, an operation control unit 3h, a power supply control unit 3j, a display unit 3k, a camera 3m, a wireless interface 3n, a wired interface 3p, a speaker 3r, a microphone 3s, an operation input unit 3t, and a power supply interface 3w. The terminal apparatus 3 further includes a communication bus 3z. The storage 3a to the power supply control unit 3j constituting the terminal apparatus 3 are connected via the communication bus 3z and can communicate with each other. Note that the display unit 3k is an example of a display device according to the present invention.

The storage 3a to the power supply interface 3w constituting the terminal apparatus 3 correspond to the storage 2a to the power supply interface 2w constituting the WEB conference server 2, respectively, and have similar functions. Thus, descriptions of the functions of the storage 3a to the power supply interface 3w will be omitted here.

However, the storage 3a includes a browser A3 in addition to the operating system A1 and the WEB conference program A2 as various programs to be stored. Further, the storage 3a includes, as various kinds of data to be stored, an input and output device management table T3 for managing input and output devices provided in the own terminal apparatus 3. In addition, the terminal apparatus 3 may include a battery 3x. The battery 3x can supply power to the units constituting the terminal apparatus 3 instead of the power supply connected to the power supply interface 3w.

In a case where the audio output device is connected to the wireless interface 3n or the wired interface 3p of the terminal apparatus 3, basically, the function of the connected audio output device is turned on, and the function of the audio output device (for example, speaker 3r) built in the terminal apparatus 3 is turned off.

Also, in a case where the microphone or the headset is connected to the wireless interface 3n or the wired interface 3p of the terminal apparatus 3, the function of the connected microphone or headset is turned on, and the function of the microphone 3s built in the terminal apparatus 3 is basically turned off.

The camera 3m captures an image of a subject positioned in front of the terminal apparatus 3. In general, the camera 3m captures an image of a face of a user of the terminal apparatus 3, that is, a participant who is participating in the WEB conference, and outputs an image signal or a video signal.

### <Functional block configuration of WEB conference system>

A functional configuration of the WEB conference system 1 according to the first embodiment will be described. Note that each functional block of the WEB conference server 2 and the terminal apparatus 3 is implemented by executing a predetermined program stored in the own storages by using a processor, a memory, and the like and cooperating with hardware.

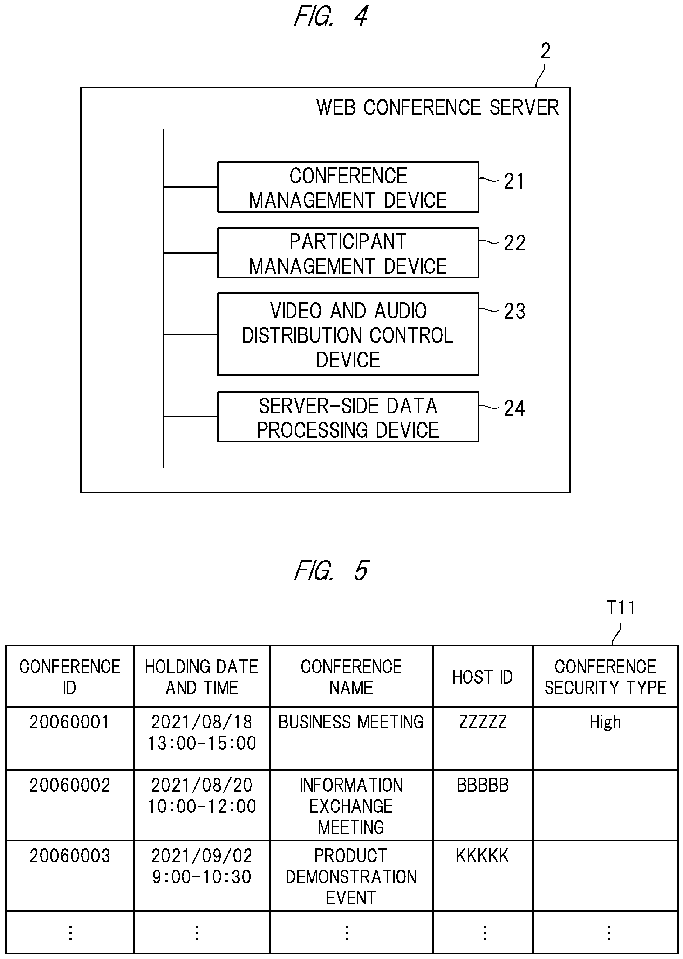

FIG. 4 is a diagram illustrating a configuration of functional blocks of the WEB conference server. As illustrated in FIG. 4, the WEB conference server 2 includes, as functional blocks, a conference management device 21, a participant management device 22, a video and audio distribution control device 23, and a server-side data processing device 24. Note that the conference management device 21 is an example of a setting acceptance device according to the present invention. In addition, the participant management device 22 is an example of a retention device, a request acceptance device, and a transmission device according to the present invention. In addition, the video and audio distribution control device 23 is an example of a control device according to the present invention.

The conference management device 21 creates, retains, and updates the conference management table T1. The conference management table T1 is a table indicating a schedule or various settings of a WEB conference to be held.

FIG. 5 is a diagram schematically illustrating the conference management table according to the first embodiment. As illustrated in FIG. 5, in a conference management table T11, "conference ID", "holding date and time", "conference name", "host ID", and "conference security type" are provided as items.

The "conference ID" is an ID for specifying a conference and is automatically assigned when the conference is reserved. The "holding date and time" is information indicating a date and time of holding the reserved conference. The "conference name" is a title of the conference, and can be input or changed by a person having authority to reserve and set the conference. The "host ID" is an individual ID for specifying the host of the conference.

The "conference security type" is an item for setting a level of confidentiality of the conference. In the present embodiment, the "conference security type" is set at two levels of "High" and "Normal". Note that, in the conference management table T11 illustrated in FIG. 5, the display of "Normal" is omitted such that the display of "High" in a field of the "conference security type" can be easily viewed.

In a case where "High" is set in the "conference security type", the confidentiality of the conference is high, and a high security level is required for audio output. On the other hand, in a case where "Normal" is set to the "conference security type", the confidentiality of the conference is normal, and a high security level is not required for audio output.

Setting "High" in the "conference security type" means that a secure mode is set in the conference. In the conference in which the secure mode is set, the transmission destination of the audio data of the utterer is determined to be limited to the terminal apparatus 3 considered to have a low risk of information leakage due to the audio output. Details of a determination method of the transmission destination of the audio data will be described later. The conference management device 21 accepts the setting of the "conference security type", that is, the secure mode, to the WEB conference to be held from a person who has authority to reserve and set the conference.

The participant management device 22 creates, retains, and updates the participant management table T2. The participant management table T2 is provided for each WEB conference being held, and includes items related to participants who are participating in the WEB conference or the terminal apparatuses 3 used by the participants. The participant management device 22 acquires various kinds of information from the terminal apparatuses 3 used by the participants, that is, the terminal apparatuses 3 connected to the WEB conference server 2, and creates the participant management table T2.

In addition, the participant management device 22 specifies face images of the participants, icons registered by the participants, names of the participants, and audio output device types being used in the terminal apparatuses 3 based on various kinds of information acquired from the terminal apparatuses 3 connected to the WEB conference server 2, and distributes these pieces of participant information to the terminal apparatuses 3. The distribution may be performed voluntarily by the participant management device 22 or may be performed in response to a request from the participant.

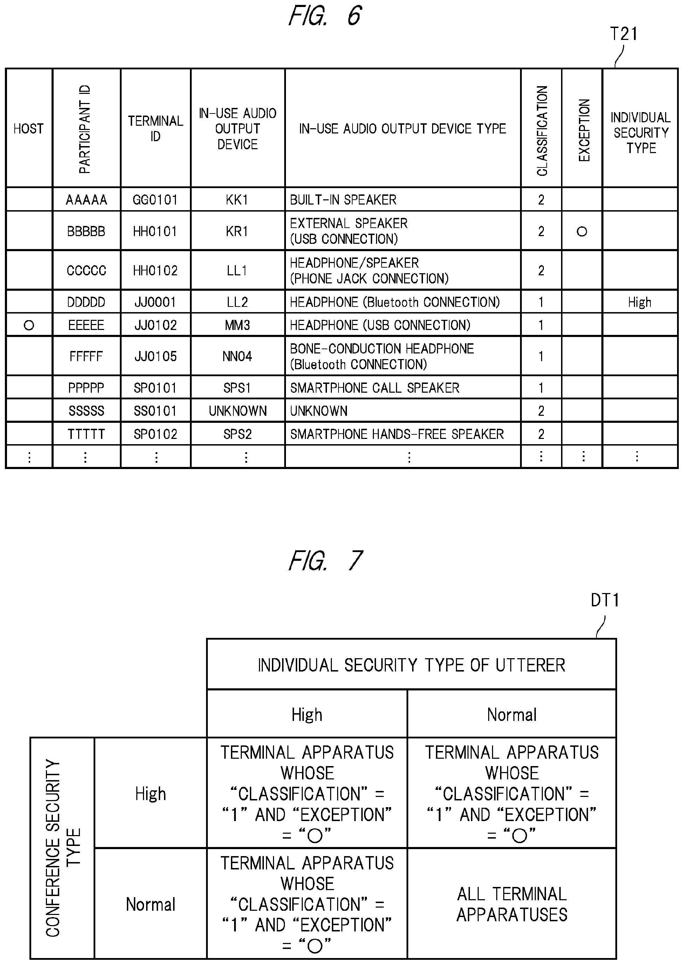

FIG. 6 is a diagram schematically illustrating the participant management table according to the first embodiment. As can be seen from a participant management table T21 illustrated in FIG. 6, the participant management table T2 includes, as items, "host", "participant ID", "terminal ID", "in-use audio output device", "in-use audio output device type", "classification", "exception", and "individual security type". The contents of these items are obtained based on various kinds of data collected from the terminal apparatuses 3. Note that the item of the "in-use audio output device type" or the "classification" is an example of device type information according to the present invention. Hereinafter, the items of the participant management table will be described.

The "host" is an item indicating whether or not the participant is a host of the WEB conference. In a case where the participant is the host, "∘" is set to the "host". The host is easily specified by viewing a field of the "host".

The "participant ID" is an item indicating a personal ID of the participant. Normally, an ID used when the participant logs in to the terminal apparatus 3 or an ID used when the participant logs in to the WEB conference is the "participant ID". The participant in the WEB conference is specified based on the "participant ID".

The "terminal ID" is an item indicating an ID unique to the terminal apparatus 3 used by the participant. The "terminal ID" may be, for example, an account assigned for each terminal apparatus 3, a serial number of the terminal apparatus 3, or the like. With which terminal apparatus 3 the participant is participating in the WEB conference is specified based on the "terminal ID".

The "in-use audio output device" is an item indicating a name, a model name, or a model number of the audio output device being used in the terminal apparatus 3. The "in-use audio output device" is used for, for example, determination or collation of the "in-use audio output device type".

Note that, in the present embodiment, the audio output device is classified into two types of devices. The first type is a headphone type device, and the second type is a speaker type device.

The headphone type device is a generic term for devices designed such that a surrounding person can hear almost no output audio, and is a device considered to have a low risk of information leakage due to the audio output. For example, a headphone, an earphone, a headset, an earset, a head-mounted display, a bone-conduction speaker, a phone call speaker of a smartphone, and the like are conceivable as the headphone type device.

The speaker type device is a generic term for devices whose output audio is likely to be heard by a surrounding person, and is a device considered to have a high risk of information leakage due to the audio output. For example, a speaker externally connected to the terminal apparatus, a speaker built in the terminal apparatus such as a personal computer or a tablet terminal, and a hands-free speaker of a smartphone are conceivable as the speaker type device.

The "in-use audio output device type" is an item indicating the type of the audio output device being used in the terminal apparatus 3. As illustrated in FIG. 6, for example, "built-in speaker", "external speaker", "headphone/speaker (phone jack connection)", "headphone", "bone-conduction headphone", "smartphone call speaker", "smartphone hands-free speaker", "unknown", and the like are set in the item of the "in-use audio output device type". The "external speaker", the "headphone", and the like can be determined by monitoring the state of USB connection or Bluetooth connection.

In a case where the "in-use audio output device" or the "in-use audio output device type" cannot be specified or is unknown, the participant management device 22 performs a process of inquiring of the participant of the terminal apparatus 3. For example, the participant management device 22 transmits, to the terminal apparatus 3, inquiry information for inquiring whether the "in-use audio output device type" is the "headphone type device" or the "speaker type device". In a case where the participant of the terminal apparatus 3 responds to the inquiry, the participant management device 22 sets the item of the "in-use audio output device" or the "in-use audio output device type" of the terminal apparatus 3 based on the response result. On the other hand, in a case where there is no response to the inquiry, the participant management device 22 sets "unknown" in the item of the "in-use audio output device" or the "in-use audio output device type".

Note that, in a case where the "in-use audio output device type" of the terminal apparatus 3 is unknown but at least the phone jack connection is detected, the participant management device 22 sets "headphone/speaker (phone jack connection)" in the item of the "in-use audio output device type". The "headphone/speaker (phone jack connection)" means either the headphone or the speaker connected by using a phone jack terminal of the terminal apparatus 3.

In addition, in a case where it is detected that an input and output device, in particular, an audio output device is externally connected to the terminal apparatus 3, the participant management device 22 acquires device information of the externally connected input and output device from the terminal apparatus 3 and updates the participant management table T2.

Note that the participant may voluntarily transmit information indicating a content to be set in the item of the "in-use audio output device" or the "in-use audio output device type" to the WEB conference server 2 by operating the own terminal apparatus 3.

The "classification" is a classification determined in accordance with the "in-use audio output device type", and is an item indicating a security level related to audio output. In the present embodiment, the "classification" is set at two levels of "1" and "2". "1" indicates a high security level, and "2" indicates a low security level. In a case where the "in-use audio output device type" is the above-described "headphone type device", "1" is set in the "classification". On the other hand, in a case where the "in-use audio output device type" is the above-described "speaker type device", "2" is set in the "classification".

The "exception" is an item indicating whether or not the exceptional treatment is given when the transmission destination of the audio data is determined. In a case where the exceptional treatment is given, "∘" is set to the "exception". When determining the transmission destination of the audio data, the terminal apparatus 3 whose "exception" is "∘" is treated similarly to the terminal apparatus 3 whose "classification" is "1". For example, in a case where the "conference security type" is "High", even though the "classification" of the audio output device being used is "2", the terminal apparatus 3 is included in the transmission destination of the audio data.

Even though the "in-use audio output device type" is the speaker type device, the terminal apparatus 3 may be under a safe environment in which the audio is unlikely to be heard by a person other than the participant. For example, the case in which a designated company employee alone participates in a WEB conference in a conference room in a company in a form in which one personal computer is used as the terminal apparatus 3 and audio is output from an externally connected speaker is conceivable. Also, for example, the case in which one participant participates in a WEB conference in a private room at home in a form in which a smartphone is used as the terminal apparatus 3 and audio is output from a hands-free speaker built in the smartphone is conceivable. In such cases, there is no problem even if the terminal apparatus 3 whose "classification" is "2" is treated similarly to the terminal apparatus 3 whose "classification" is "1". The "exception" is provided on assumption of such situations.

A setting method of the "exception" will be described. The "exception" is basically set based on a request from the participant. In a case where a participant is under the safe environment and wants the own terminal apparatus 3 to be treated similarly to the terminal apparatus 3 whose "classification" is "1", the participant performs an operation of requesting the setting of "∘" in the "exception" on the own terminal apparatus 3. With this operation, a request signal for the setting of "∘" in the "exception" is transmitted to the participant management device 22 of the WEB conference server 2. In response to the received request signal, the participant management device 22 accepts the request, and transmits an inquiry signal for inquiring about whether or not to permit the setting of "∘" in the "exception" to the terminal apparatus 3 of the host. The terminal apparatus 3 of the host executes a process of inquiring about whether or not to permit the setting of "∘" in the "exception" for the host based on the received inquiry signal. When the host performs an operation of permitting the setting of "∘" in the "exception" on the terminal apparatus 3 of the host, a permission signal is transmitted to the participant management device 22 of the WEB conference server 2, and the item of the "exception" of the terminal apparatus 3 that has transmitted the request signal is set to "∘".

The "individual security type" is an item for setting the security level of the audio output when the audio data corresponding to the audio of the utterer input to the terminal apparatus 3 is distributed to the terminal apparatuses 3 of other participants. In the present embodiment, the "individual security type" is set at two levels of "High" and "Normal". Note that, in the participant management table T21 illustrated in FIG. 6, the display of "Normal" is omitted in the field of the "individual security type" such that the display of "High" can be easily viewed.

In a case where the participant utters by using the terminal apparatus 3 whose "individual security type" is "High", even though the "conference security type" is "Normal", the transmission destination of the audio data of the utterer is limited to the terminal apparatus 3 whose "classification" is "1" or whose "exception" is "∘". Namely, the audio data is distributed only to the terminal apparatus 3 having high security related to audio output. Therefore, the "individual security type" is a setting effective in a case where the participant temporarily gives an utterance with high confidentiality.

A setting method of the "individual security type" will be described. The "individual security type" is basically set based on a request from the participant. In a case where a participant wants to deliver his or her utterance only to other participants having a high security level of audio output, the participant performs an operation of requesting the setting of "High" in the "individual security type" on the own terminal apparatus 3. By this operation, a request signal for the setting of "High" in the "individual security type" is transmitted to the participant management device 22 of the WEB conference server 2. In response to the received request signal, the participant management device 22 accepts the request, and transmits an inquiry signal for inquiring about whether or not to permit the setting of "High" in the "individual security type" to the terminal apparatus 3 of the host.

The terminal apparatus 3 of the host executes a process of inquiring about whether or not to permit the setting of "High" in the "individual security type" for the host based on the received inquiry signal. When the host performs an operation of permitting the setting of "High" in the "individual security type" on the terminal apparatus 3 of the host, a permission signal is transmitted to the participant management device 22 of the WEB conference server 2, and the item of the "individual security type" of the terminal apparatus 3 that has transmitted the request signal is set to "High".

In addition, in a case where a participant wants to cancel the setting of "High" in the " individual security type" and return the setting to "Normal", the participant performs an operation of requesting the setting of "Normal" in the "individual security type" on the own terminal apparatus 3. By this operation, a request signal for the setting of "Normal" in the "individual security type" is transmitted to the terminal apparatus 3 of the host via the participant management device 22 of the WEB conference server 2. When the host performs an operation of permitting the setting of "Normal" on the terminal apparatus 3 of the host, the "individual security type" of the terminal apparatus 3 that has transmitted the request signal is set to "Normal".

Note that, regarding the setting in the "exception" and the "individual security type", all requests from the participants may be automatically permitted by omitting the procedure of permission by the host. Also, even though there is no request from the participants, the host may perform the setting in the "exception" or the "individual security type" of the specific terminal apparatus 3 at the discretion of the host.

The video and audio distribution control device 23 distributes video data received from the terminal apparatuses 3 of the participants having authority to share a video to the terminal apparatuses 3 of all the participants in principle. In addition, the video and audio distribution control device 23 manages whether or not any participant has the authority to share the video. Note that the transmission destination of the video data may be determined by the host, or may be limited to the terminal apparatuses 3 of the participants considered to have a low risk of information leakage via the video. For example, the terminal apparatus 3 whose installation place is unknown and whose setting of the video output device is a projector may be excluded from the transmission destination of the video data.

In addition, the video and audio distribution control device 23 determines the transmission destination of the audio data received from the terminal apparatus 3 of the utterer based on the conference management table T1 and the participant management table T2, and distributes the audio data only to the determined transmission destination. A determination method of the transmission destination will be specifically described below.

FIG. 7 is a diagram illustrating a table for describing the determination method of the transmission destination of the audio data. As understood from an audio data transmission destination determination table DT1 illustrated in FIG. 7, the video and audio distribution control device 23 determines the transmission destination of the audio data based on the setting in the "conference security type" and the setting in the "individual security type" of the utterer. In a case where the "conference security type" of the conference management table T1 is "High", the video and audio distribution control device 23 limits the transmission destination of the audio data of the utterer to the terminal apparatus 3 whose "classification" of the participant management table T2 is "1" or whose "exception" is "∘" in principle. In addition, in a case where the "conference security type" of the conference management table T1 is "Normal", the video and audio distribution control device 23 determines all the terminal apparatuses 3 as the transmission destination of the audio data of the utterer in principle.

However, as described above, in a case where "High" is set in the "individual security type" of the utterer in the participant management table T2, the setting is prioritized, and the transmission destination of the audio data of the utterer is limited to the terminal apparatus 3 whose "classification" of the participant management table T2 is "1" or whose "exception" is "∘". In other words, in a case where "Normal" is set in the "individual security type" of the utterer in the participant management table T2, the transmission destination of the audio data of the utterer is determined in accordance with the "conference security type" of the conference management table T1.

The server-side data processing device 24 performs processes other than the processes performed by the conference management device 21, the participant management device 22, and the video and audio distribution control device 23 among the processes performed by the WEB conference server. The server-side data processing device 24 performs, for example, a process related to participating and leaving of the terminal apparatus 3 in and from the WEB conference, a process related to transmission and reception of the video data or the audio data, a process related to holding and ending of the WEB conference, and the like.

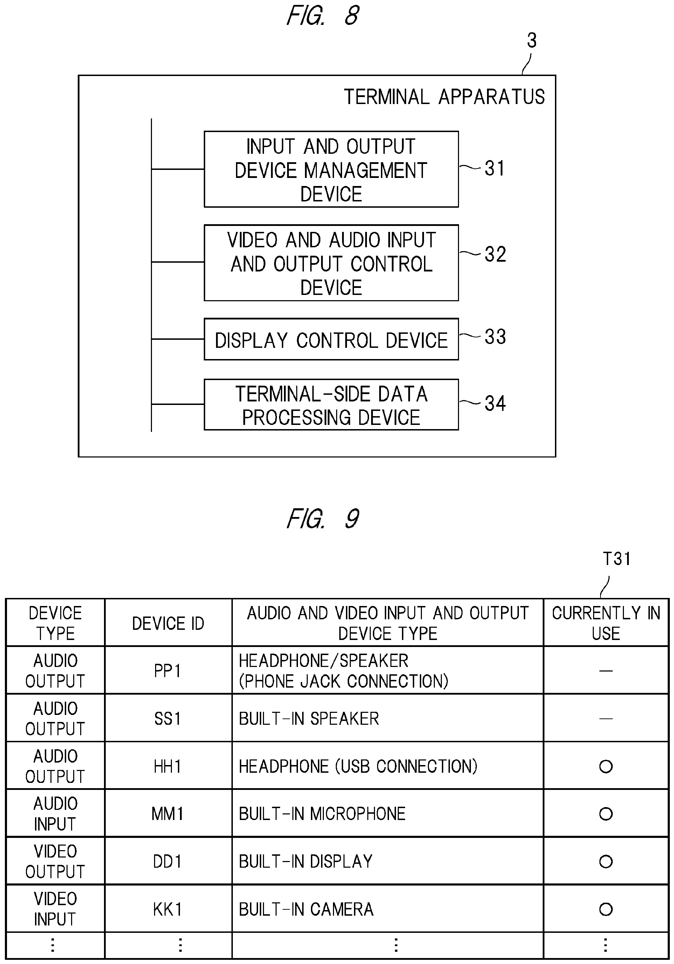

FIG. 8 is a diagram illustrating a configuration of functional blocks of the terminal apparatus. As illustrated in FIG. 8, the terminal apparatus 3 includes, as functional blocks, an input and output device management device 31, a video and audio input and output control device 32, a display control device 33, and a terminal-side data processing device 34. Note that the display control device 33 is an example of a display control device according to the present invention.

The input and output device management device 31 manages information related to input and output devices of the own terminal apparatus. The input and output device management device 31 retains, for example, an input and output device management table.

FIG. 9 is a diagram schematically illustrating the input and output device management table. As can be seen from an input and output device management table T31 illustrated in FIG. 9, for example, the input and output device management table T3 includes, as items, "device type", "device ID", "audio and video input and output device type", and "currently in use".

The "device type" is an item indicating a type of the audio or video input and output device built in or connected to the terminal apparatus 3. For example, "audio input", "audio output", "video input", "video output", and the like are set in the "device type".

The "device ID" is an item indicating an ID unique to the audio or video input and output device built in or connected to the terminal apparatus 3. For example, an ID assigned in advance, a serial number, and the like are set in the "device ID".

The "audio and video input and output device type" is an item indicating whether the audio or video input device is built-in or externally connected, or the headphone type or the speaker type, or the like. For example, "headphone/speaker (phone jack connection)", "headphone (USB connection)", "headphone (Bluetooth connection)", "built-in speaker", "speaker (Bluetooth connection)", "speaker (USB connection)", "bone-conduction headphone", "head mounted display", "built-in microphone", "built-in display", and the like are set in the "audio and video input and output device type". In a case where the terminal apparatus 3 is a smartphone, "smartphone call speaker", "smartphone hands-free speaker", and the like are also set in the "audio and video input and output device type".

The "currently in use" is an item indicating whether or not the input and output device is currently used. "∘" is set in the item of the "currently in use" corresponding to the input and output device being used. Nothing is set or "-", "×", or the like is set in the item of the "currently in use" corresponding to the input and output device not being used.

The host or the participant specifies available audio and video input and output devices and currently used audio and video input and output devices in the terminal apparatus 3 by referring to the input and output device management table T3 of the terminal apparatus 3. The participant management device 22 of the WEB conference server 2 can create the participant management table T2 by acquiring information from the input and output device management tables T3 in the terminal apparatuses 3.

The information of the input and output device management tables T3 may be voluntarily transmitted by the terminal apparatuses 3 to the WEB conference server 2, or may be collected by the WEB conference server 2 from the terminal apparatuses 3. In addition, in a case where the content of the input and output device management table T3 is changed, the changed content is reflected in the participant management table T2. For example, the WEB conference server 2 may periodically read information by referring to the input and output device management tables T3 of the terminal apparatuses 3. Also, for example, in a case where the content of the input and output device management table T3 in the terminal apparatus 3 is changed, the terminal apparatus 3 may transmit the changed content to the WEB conference server 2.

In a case where the video data is received from the WEB conference server 2, the video and audio input and output control device 32 controls the video output device being used such that the video corresponding to the video data is displayed. In addition, in a case where the video is input to the video input device being used, for example, in a case where setting for sharing a screen with the participant of the WEB conference is performed or an image of a subject is captured by the camera, the video and audio input and output control device 32 transmits the video data corresponding to the input video to the WEB conference server 2.

In addition, in a case where the audio data is received from the WEB conference server 2, the video and audio input and output control device 32 controls the audio output device being used such that the audio corresponding to the audio data is output. In addition, in a case where the audio is input to the audio input device being used, the video and audio input and output control device 32 transmits the audio data corresponding to the input audio to the WEB conference server 2.

The display control device 33 controls the display unit 3k such that an image, text information, or the like related to the WEB conference is displayed during the WEB conference. Data corresponding to the content displayed on the display unit 3k is acquired from the WEB conference server 2. The content to be displayed is, for example, a video or an image shared by the participants of the WEB conference, information related to an operation of the WEB conference, information related to the participants in the WEB conference, and the like.

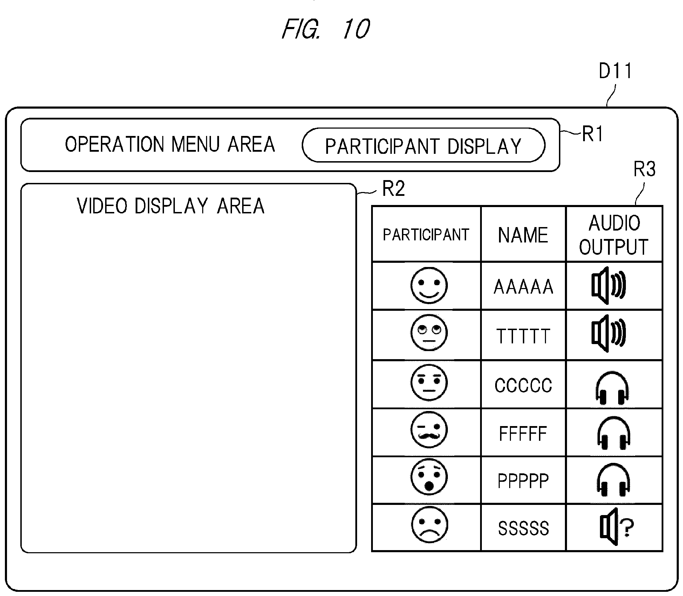

FIG. 10 is a diagram schematically illustrating an example of a display screen of a terminal apparatus. In a display screen D11 illustrated in FIG. 10, for example, an "operation menu area" R1 is displayed at an upper portion of the screen, a "video display area" R2 is displayed at a center left portion of the screen, and a "participant information area" R3 is displayed at a center right portion of the screen. In the "participant information area" R3, fields of "participant", "name", and "audio output" are provided for each participant.

An image captured by the camera of the terminal apparatus 3 of the participant (normally, the face image of the participant) is displayed in the field of the "participant". An image or an icon previously registered by the participant in association with the participant ID may be displayed in the field of the "participant".

The name of the participant is displayed in the field of the "name". The "name" may be a name associated with a personal ID used when the participant logs in to the terminal apparatus 3, or may be a name input by the participant when the participant participates in the WEB conference.

An icon corresponding to the "in-use audio output device type" of the terminal apparatus 3 of the participant is displayed in the field of the "audio output". In a case where the "in-use audio output device type" is the "speaker type device", an icon corresponding to the speaker, for example, an icon including an image imitating a shape of the speaker is displayed. In addition, in a case where the "in-use audio output device type" is the "headphone type device", an icon corresponding to the headphone, for example, an icon including an image imitating a shape of the headphone is displayed. In a case where the "in-use audio output device type" is unknown, an icon corresponding to an unknown type, for example, an icon including an image indicating a question mark is displayed.

In addition, the display control device 33 controls the display unit 3k to display a text indicating a warning, a caution, a situation, and the like on a screen based on a control signal or data acquired from the WEB conference server 2. The control signal is, for example, a control signal for displaying the text. In addition, the data is, for example, data indicating that the terminal apparatus 3 that has received the data is out of the transmission destination of the audio data, and data including only the video data out of the video data and the audio data (data capable of understanding that the terminal apparatus 3 is out of the transmission destination of the audio data). The text displayed on the screen is, for example, a message indicating that the audio is distributed only to the terminal apparatus whose audio output device is the headphone type device, or a message prompting to switch the audio output device to the headphone type device. Also, for example, the text may be a message or the like notifying that the own terminal apparatus is out of the distribution destination of the audio.

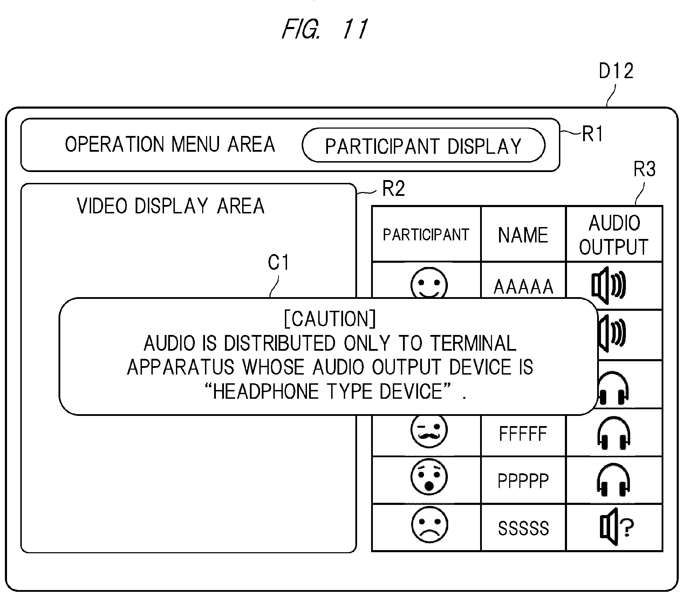

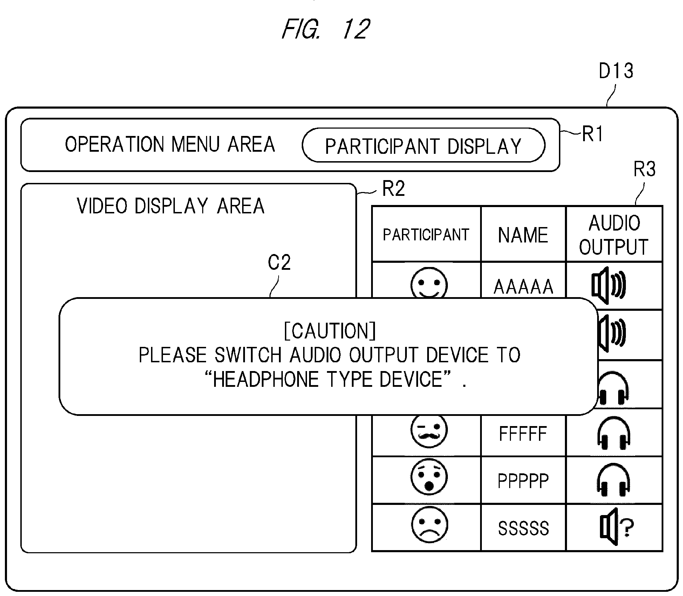

FIG. 11 and FIG. 12 are diagrams schematically illustrating examples of screens on which texts are displayed. For example, as in a message C1 in a display screen D12 illustrated in FIG. 11, "audio is distributed only to the terminal apparatus whose audio output device is "headphone type device"." is displayed. Also, for example, as in a message C2 in a display screen D13 illustrated in FIG. 12, "please switch the audio output device to the "headphone type device"." is displayed.

Note that, in a case where the WEB conference server 2 has a function of converting the audio into the text and data of the text converted from the audio is output to the terminal apparatus, the display control device 33 may control the display unit to display the text converted from the audio, that is, a subtitle on the screen.

The terminal-side data processing device 34 performs processes other than the processes performed by the input and output device management device 31, the video and audio input and output control device 32, and the display control device 33 among the processes performed by the terminal apparatus 3. The terminal-side data processing device 34 performs, for example, a process related to log-in of the terminal apparatus 3, a process related to transmission and reception of the audio data of the utterance from the terminal apparatus 3, a process related to participating and leaving in and from the WEB conference, and the like.

### <Process flow of WEB conference system according to first embodiment>

A process flow of the WEB conference system according to the first embodiment will be described.

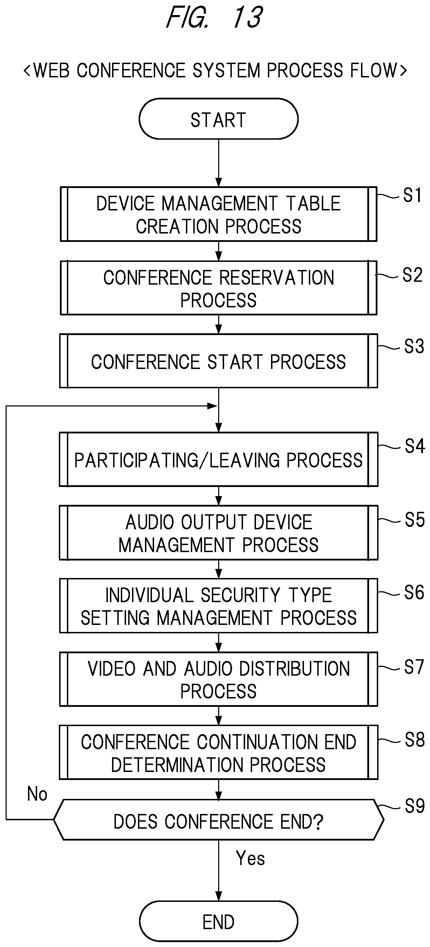

FIG. 13 is a diagram illustrating an outline of a process flow of the WEB conference system according to the first embodiment. As illustrated in FIG. 13, the WEB conference system 1 includes steps S1 to S9 as an outline of the process flow. Note that the process flow is simplified such that the process executed in the WEB conference system 1 can be easily understood. Thus, in practice, there is a possibility that various kinds of processes are complicatedly executed by server-client communication between the WEB conference server 2 and the plurality of terminal apparatuses 3. For example, some processes may be executed in parallel, or some processes may be constantly executed repeatedly as a routine.

### «S1: Device management table creation process»

In step S1, device management table creation process is executed.

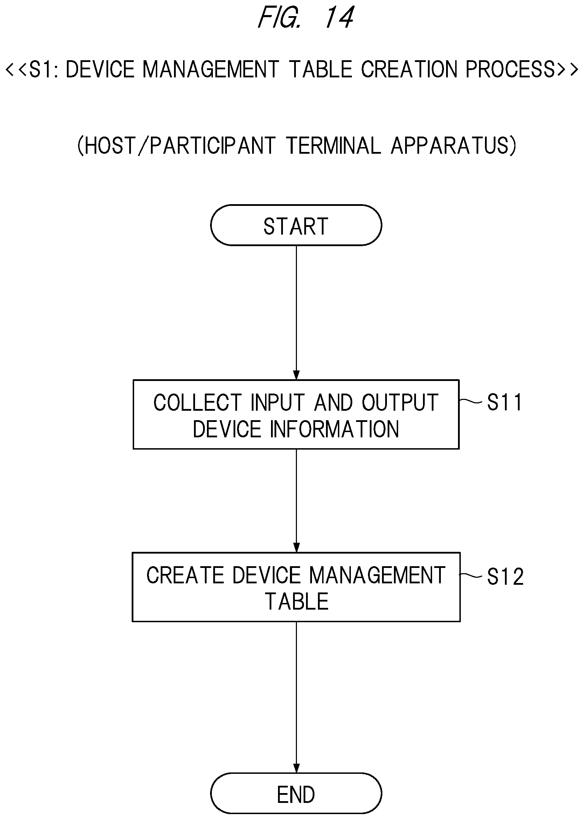

FIG. 14 is a diagram illustrating an example of a flow of the device management table creation process. As illustrated in FIG. 14, the device management table creation process in step S1 includes steps S11 to S12.

In step S11, the input and output device management devices 31 of the terminal apparatuses 3 of the host and the participants collect the device information about the input and output devices built in the own terminal apparatuses 3 or the input and output devices externally connected thereto.

In step S12, the input and output device management device 31 of each terminal apparatus 3 creates the input and output device management table T3 based on the collected device information. As described above, the device management table creation process in step S1 ends.

Note that the device management table creation process is normally automatically executed after the OS of the terminal apparatus 3 is started up. However, the device management table creation process may be executed in accordance with an operation of the terminal apparatus 3 by the user.

### «S2: Conference reservation process»

In step S2, conference reservation process is executed.

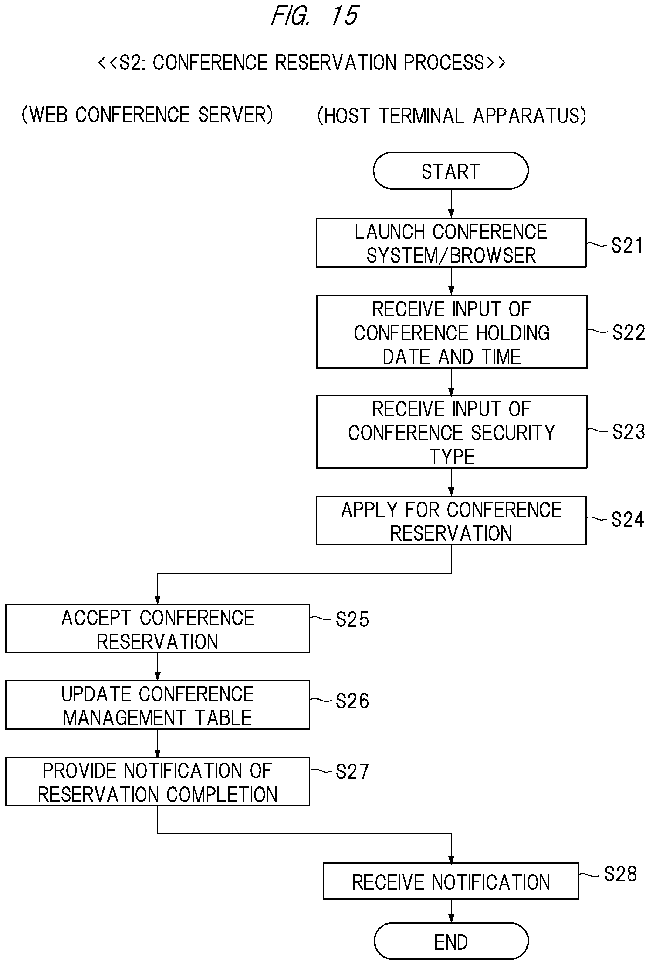

FIG. 15 is a diagram illustrating an example of a flow of the conference reservation process. As illustrated in FIG. 15, the conference reservation process in step S2 includes step S21 to S28.

In step S21, the terminal-side data processing device 34 of the terminal apparatus used by the host activates the conference application or the browser based on the operation of the host.

In step S22, the terminal-side data processing device 34 receives an input of a desired date and time of the WEB conference to be held based on the operation of the host.

In step S23, the terminal-side data processing device 34 receives an input of the conference security type of the WEB conference to be held based on the operation of the host.

In step S24, the terminal-side data processing device 34 transmits, to the WEB conference server 2, a conference reservation application signal for applying for conference reservation with the input holding date and time and conference security type.

In step S25, the conference management device 21 of the WEB conference server 2 receives the conference reservation application signal and accepts the application.

In step S26, the conference management device 21 writes the conference reservation in the conference management table T1 based on the received conference reservation application signal, and updates the conference management table T1.

In step S27, the conference management device 21 transmits a reservation completion notification to the terminal apparatus 3 of the host.

In step S28, the terminal-side data processing device 34 in the terminal apparatus 3 of the host receives the reservation completion notification. As described above, the conference reservation process in step S2 ends.

Note that, although the host requests the conference reservation by using the terminal apparatus 3 of the host in the above embodiment, a participant having authority to reserve the conference may request the conference reservation by using the own terminal apparatus 3.

### «S3: Conference start process»

In step S3, conference start process is executed.

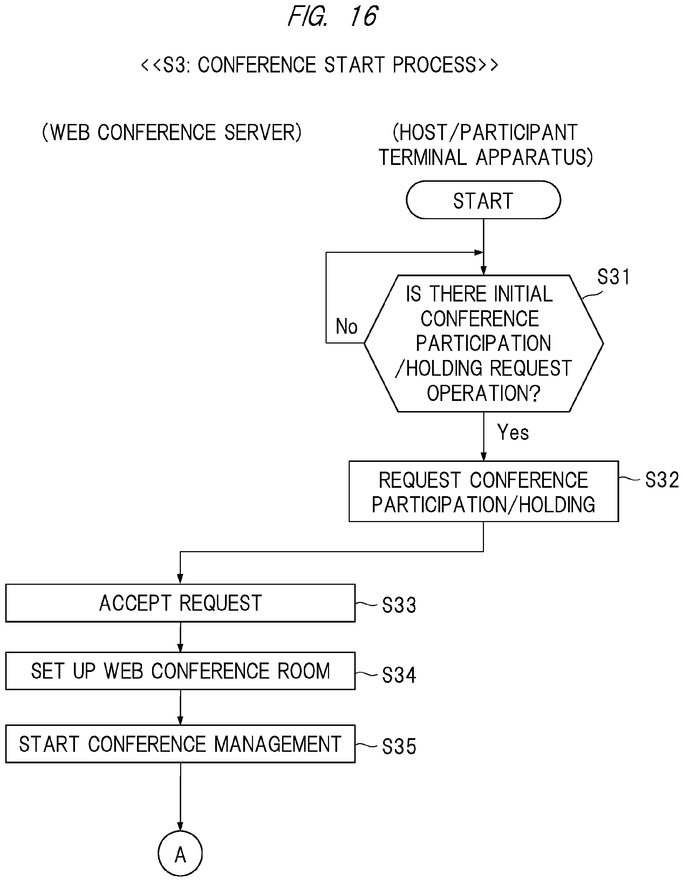

FIG. 16 is a diagram illustrating an example of a flow of the conference start process. As illustrated in FIG. 16, the conference start process in step S3 includes steps S31 to S35.

In step S31, in the terminal apparatus 3 of the host or the participant, the terminal-side data processing device 34 determines whether or not there is a first conference participation request by the participant or an operation of a conference holding request by the host. In a case where it is determined that the operation has been performed (S31: Yes), the flow proceeds to step S32. On the other hand, in a case where it is determined that the operation has not been performed (S31: No), the flow returns to step S31.

In step S32, the terminal-side data processing device 34 transmits the conference holding request signal or the conference participation request signal corresponding to the above operation to the WEB conference server 2.

In step S33, the server-side data processing device 24 of the WEB conference server 2 receives the conference holding request signal or the conference participation request signal.

In step S34, the server-side data processing device 24 sets up a virtual WEB conference room on the network 4.

In step S35, the server-side data processing device 24 starts conference management process. Then, the flow proceeds to step S44 in participating and leaving request process.

### «S4: Participating and leaving process»

In step S4, participating and leaving process is executed.

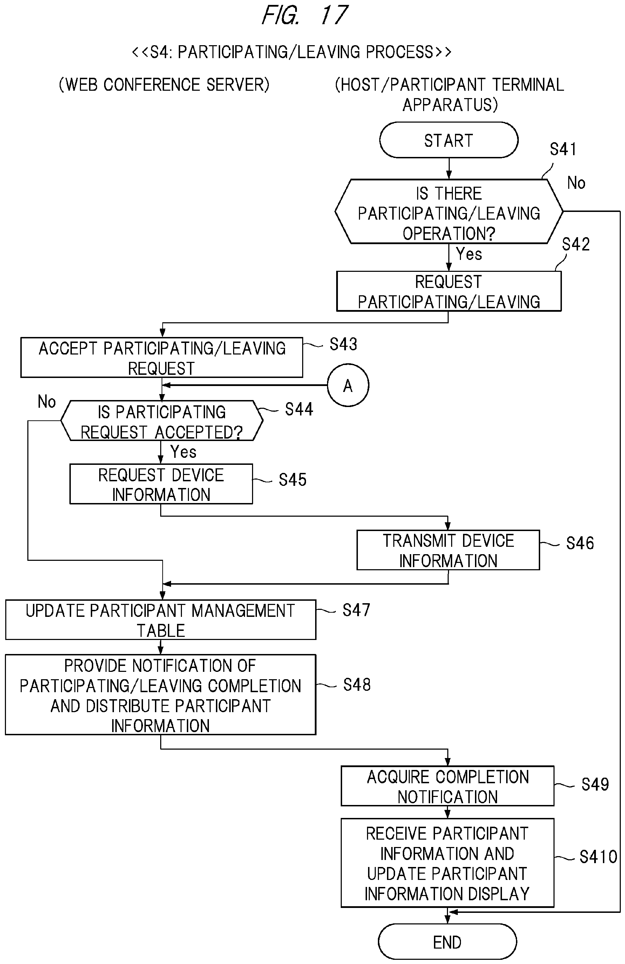

FIG. 17 is a diagram illustrating an example of a flow of the participating/leaving process. As illustrated in FIG. 17, the participating and leaving process in step S4 includes steps S41 to S410.

In step S41, in the terminal apparatus 3 of the host or the participant, the terminal-side data processing device 34 determines whether or not there is an operation of participating or leaving. In a case where it is determined that the operation has been performed (S41: Yes), the flow proceeds to step S42. On the other hand, in a case where it is determined that the operation has not been performed (S41: No), the participating and leaving process ends.

In step S42, the terminal-side data processing device 34 transmits a participating or leaving request signal to the WEB conference server 2.

In step S43, the server-side data processing device 24 of the WEB conference server 2 receives the participating or leaving request signal, that is, accepts a participating or leaving request.

In step S44, the server-side data processing device 24 determines whether or not the received signal is the participating request signal, that is, whether or not the participation request has been accepted. In a case where it is determined that the signal is the participating request signal (S44: Yes), the flow proceeds to step S45. On the other hand, in a case where it is determined that the signal is not the participating request signal, that is, the signal is the leaving request signal (S44: No), the flow proceeds to step S47.

In step S45, the server-side data processing device 24 transmits a request signal for requesting input and output device information to the terminal apparatus 3.

In step S46, in response to the request signal, the terminal apparatus 3 transmits the own input and output device information to the WEB conference server 2.

In step S47, the participant management device 22 of the WEB conference server 2 updates the participant management table T2 based on the received input and output device information.

In step S48, the server-side data processing device 24 transmits a participating or leaving completion notification to the terminal apparatus 3 that participates in or leaves from the conference. In addition, the server-side data processing device 24 distributes the updated participant information to the terminal apparatuses 3 of all the participants.

In step S49, the terminal-side data processing device 34 of the terminal that participates in or leaves from the conference receives (acquires) the participating or leaving completion notification.

In step S410, the terminal-side data processing devices 34 in the terminal apparatuses 3 of all the participants receive (acquire) the updated participant information. Also, the display control devices 33 in the terminal apparatuses 3 of all the participants update the display of the "participant information area" R3 on the display screen D11 of the terminal apparatus 3 based on the received updated participant information. As described above, the participating and leaving process in step S4 ends.

### «S5: Audio output device management process»

In step S5, audio output device management process is executed.

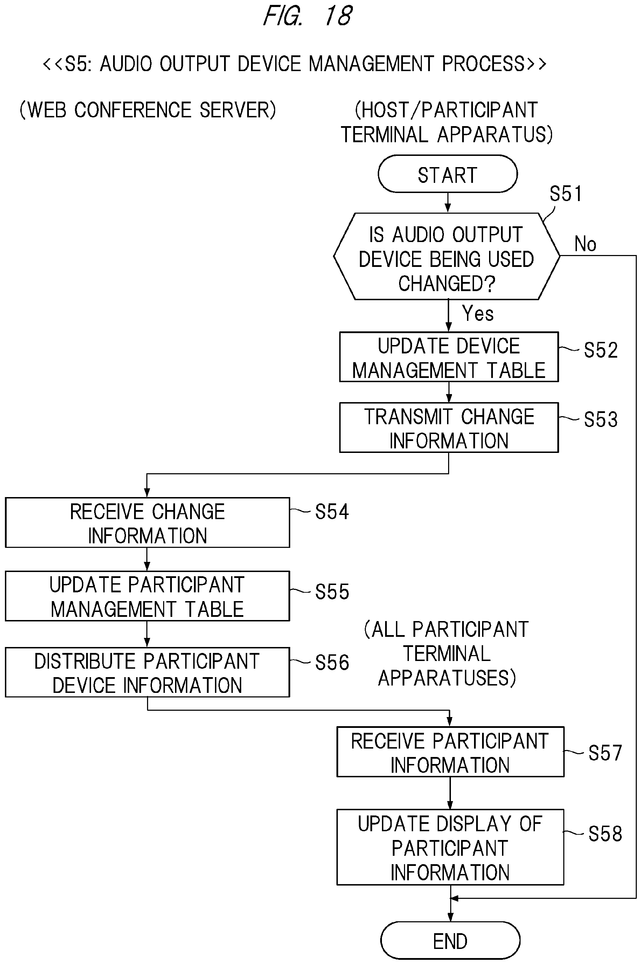

FIG. 18 is a diagram illustrating an example of a flow of the audio output device management process. As illustrated in FIG. 18, the audio output device management process in step S5 includes steps S51 to S58.

In step S51, in the terminal apparatus 3 of the host or the participant, the input and output device management device 31 determines whether or not there is a change in the audio output device being used in the own terminal apparatus. In a case where it is determined that there is the change (S51: Yes), the flow proceeds to step S52. On the other hand, in a case where it is determined that there is no change (S51: No), the audio output device management process ends.

In step S52, the input and output device management device 31 updates the input and output device management table T3 of the own terminal apparatus 3 such that the change is reflected.

In step S53, the input and output device management device 31 transmits change information indicating the changed content to the WEB conference server 2.

In step S54, the participant management device 22 of the WEB conference server 2 receives the change information.

In step S55, the participant management device 22 updates the participant management table T2 based on the received change information.

In step S56, the server-side data processing device 24 distributes, to all the terminal apparatuses 3, device change information indicating the terminal apparatus in which the audio output device being used has been changed and the changed content based on the updated participant management table T2.

In step S57, the terminal-side data processing devices 34 in the terminal apparatuses 3 of all the participants receive the device change information distributed from the WEB conference server 2.

In step S58, the display control devices 33 in the terminal apparatuses 3 of all the participants update the display of the field of the "audio output" in the "participant information area" R3 of the display screen D11 based on the received device change information. As described above, the audio output device management process in step S5 ends.

### «S6: Individual security type setting management process»

In step S6, individual security type setting management process is executed.

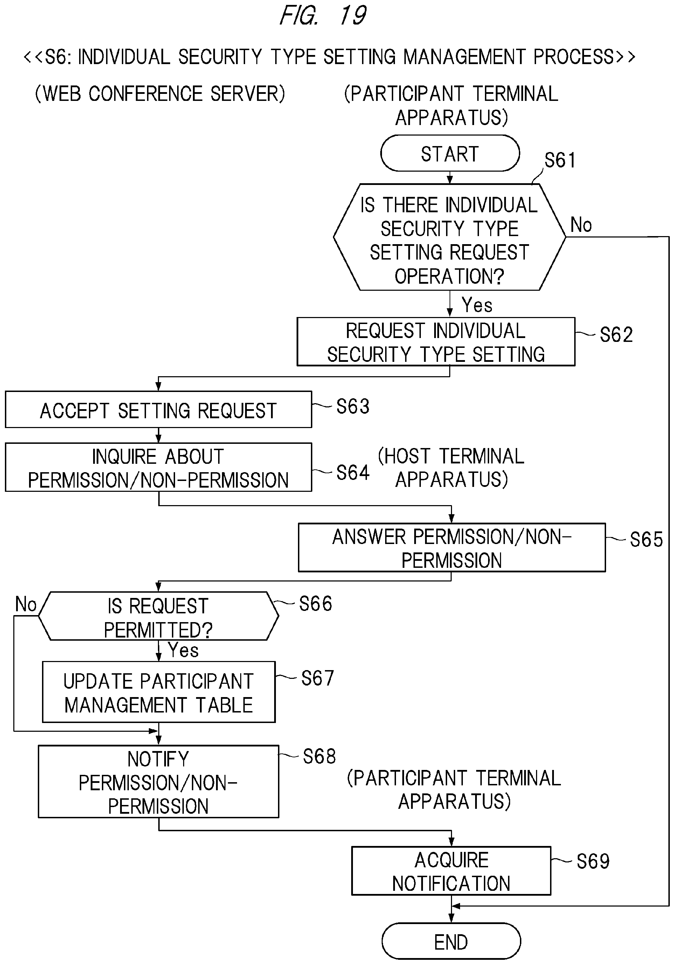

FIG. 19 is a diagram illustrating an example of a flow of the individual security type setting management process. As illustrated in FIG. 19, the individual security type setting management process in step S6 includes steps S61 to S69.

In step S61, the terminal-side data processing device 34 in the terminal apparatus 3 of the participant determines whether or not an operation of a setting request of the "individual security type" is performed in the own terminal apparatus 3. In a case where it is determined that the operation has been performed (S61: Yes), the flow proceeds to step S62. On the other hand, in a case where it is determined that the operation has not been performed (S61: No), the individual security type setting management process ends.

In step S62, the terminal-side data processing device 34 of the terminal apparatus 3 in which the operation has been performed transmits a setting change request signal for requesting a setting change of the individual security type to the WEB conference server 2. For example, a setting change request signal indicating that it is desired to change the setting in the "individual security type" from "Normal" to "High" is transmitted.

In step S63, the participant management device 22 of the WEB conference server 2 receives the setting change request signal transmitted in step S62, that is, accepts the setting request.

In step S64, the participant management device 22 transmits an inquiry signal for inquiring about whether or not to permit the setting change to the terminal apparatus 3 of the host.

In step S65, the terminal-side data processing device 34 in the terminal apparatus 3 of the host inquires of the host about whether or not to permit the setting change based on the received inquiry signal. For example, the terminal-side data processing device 34 displays a text such as "Participant AAAAA wants to set the individual security type to High. Do you permit it? (YES/NO)" on the screen of the terminal apparatus 3 in cooperation with the display control device 33. In a case where the host permits the setting change, the host performs an operation of virtually pressing the "Yes" button, and in a case where the host does not permit the setting change, the host performs an operation of virtually pressing the "No" button. In response to the operation, the terminal-side data processing device 34 transmits permission/non-permission answer information indicating a permission/non-permission answer to the participant management device 22 of the WEB conference server 2.

In step S66, the participant management device 22 receives the permission/non-permission answer information and determines whether the answer to the setting change request is permission or non-permission. In a case where it is determined to be permitted (S66: Yes), the flow proceeds to step S67. On the other hand, in a case where it is determined to be not permitted (S66: No), the flow proceeds to step S68.

In step S67, the participant management device 22 sets the "individual security type" in the terminal apparatus 3 of the participant who has requested the setting change to "High", and updates the participant management table T2. Thereafter, the flow proceeds to step S68.

In step S68, the participant management device 22 notifies the terminal apparatus 3 of the participant who has requested the setting change of the permission/non-permission answer result from the host.

In step S69, the terminal-side data processing device 34 in the terminal apparatus 3 of the participant who has requested the setting change acquires the notification of the permission/non-permission answer result, and the display control device 33 in the terminal apparatus 3 displays the permission/non-permission answer result on the screen. As described above, the individual security type setting management process in step S6 ends.

### «S7: Video and audio distribution process»

In step S7, video and audio distribution process is executed.

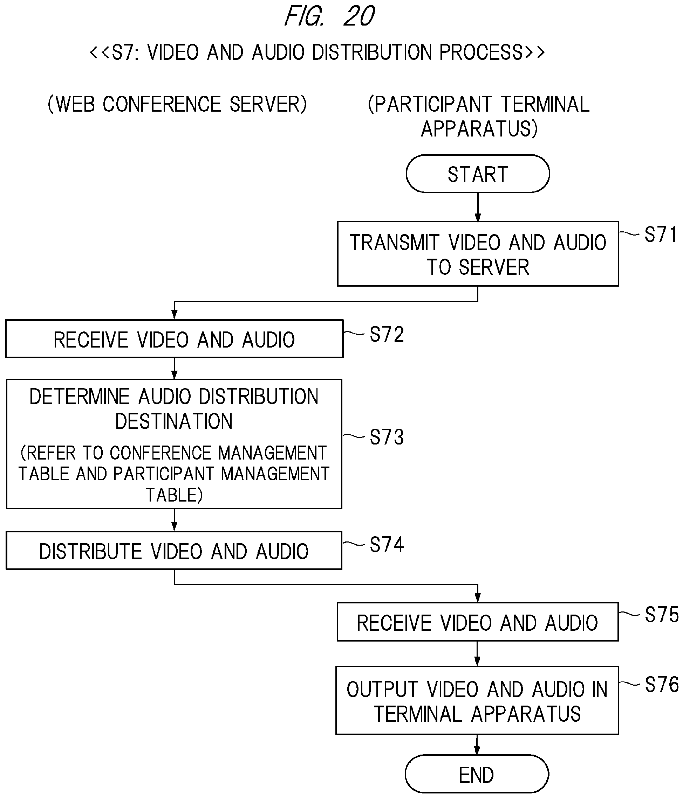

FIG. 20 is a diagram illustrating an example of a flow of the video and audio distribution process. As illustrated in FIG. 20, the video and audio distribution process in step S7 includes steps S71 to S76.

In step S71, the video and audio input and output control device 32 in the terminal apparatus 3 of the utterer converts the audio of the utterer into the audio data via the audio input device such as a microphone and an AD converter, and transmits the audio data to the WEB conference server 2. In addition, the video and audio input and output control device 32 in the terminal apparatus 3 of the video provider converts a video to be provided and shared with the participants, for example, a slide image displayed on the screen of the own terminal apparatus 3 into video data, and transmits the video data to the WEB conference server 2.

In step S72, the video and audio distribution control device 23 of the WEB conference server 2 receives the video data from the terminal apparatus 3 of the video provider, and receives the audio data from the terminal apparatus 3 of the utterer.

In step S73, the video and audio distribution control device 23 determines the terminal apparatus 3 to be the transmission destination of the audio data based on the contents of the conference management table T1 and the participant management table T2. In particular, the video and audio distribution control device 23 determines the transmission destination of the audio data based on the setting in the "conference security type" of the conference management table T1 or the "in-use audio output device type" or the "classification" of the participant management table T2.

For example, in a case where "High" is set in the "conference security type", the video and audio distribution control device 23 determines the terminal apparatus 3 in which "1" is set in the "classification" as the transmission destination of the audio data. Namely, in a case where the secure mode is set for the WEB conference being held, the video and audio distribution control device 23 determines only the terminal apparatus 3 whose type of the audio output device being used is the headphone type as the transmission destination.

Also, for example, in a case where "High" is set in the "individual security type" of the utterer, the video and audio distribution control device 23 determines the terminal apparatus 3 in which "1" is set in the "classification" as the transmission destination of the audio data. Namely, in a case where the permission for secure transmission is set for the terminal apparatus 3, the video and audio distribution control device 23 determines only the terminal apparatus 3 whose type of the audio output device being used is the headphone type as the transmission destination of the audio data.

In step S74, the video and audio distribution control device 23 distributes the video data to the terminal apparatuses 3 of all the participants. In addition, the video and audio distribution control device 23 distributes the audio data of the utterer to the terminal apparatus 3 to be the transmission destination determined in step S73.

In step S75, the video and audio input and output control device 32 of each terminal apparatus 3 receives the video data or the audio data distributed from the WEB conference server 2. In addition, the video and audio input and output control device 32 controls the display unit 3k to display a text indicating a warning, a caution, a situation, or the like on a screen based on a control signal or data acquired from the WEB conference server 2 in cooperation with the display control device 33. The text displayed on the screen in the terminal apparatus 3 that has not received the audio data, is, for example, a message indicating that the audio is distributed only to the terminal apparatus whose audio output device is the headphone type device, a message prompting to switch the audio output device to the headphone type device, a message notifying that the own terminal apparatus is out of the distribution destination of the audio, or the like.

In step S76, the video and audio input and output control device 32 of each terminal apparatus 3 displays the video indicated by the received video data on the screen of the display unit 3k in cooperation with the display control device 33. In addition, the video and audio input and output control device 32 of each terminal apparatus 3 controls the audio output device being used in the own terminal apparatus 3 to output the audio indicated by the received audio data. As described above, the video and audio distribution process in step S7 ends.

Note that the number of utterers in the WEB conference is not constantly limited to one, and a case where a plurality of participants utter at the same time is also assumed. In a case where the plurality of participants utter at the same time, it is possible to make it appear as if the audios of the plurality of utterers are distributed almost at the same time by converting each audio into very short divided audio data and distributing the divided audio data in turn.

### «S8: Conference continuation end determination process»

In step S8, conference continuation end determination process is executed.

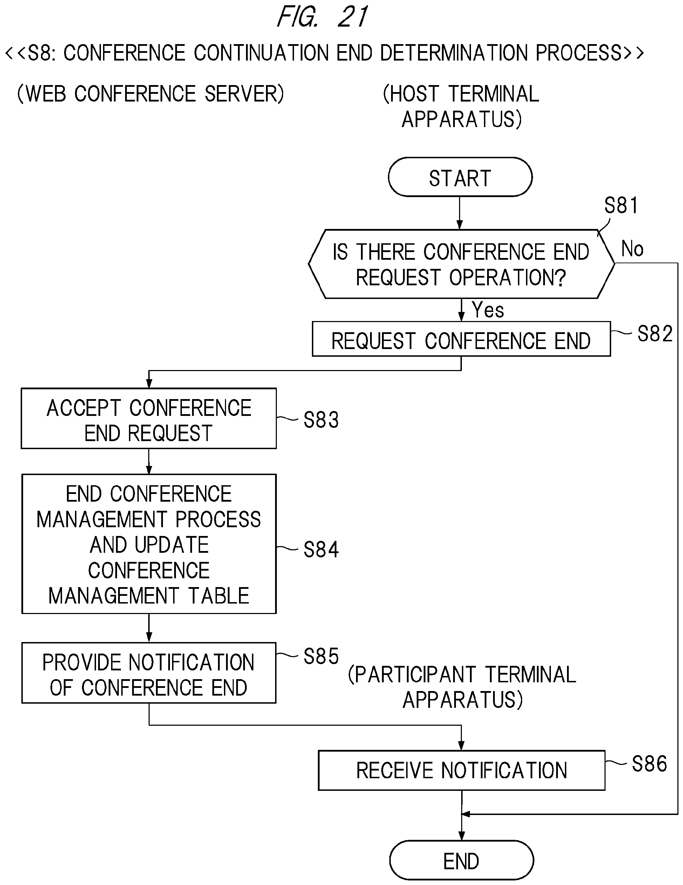

FIG. 21 is a diagram illustrating an example of a flow of the conference continuation end determination process. As illustrated in FIG. 21, the conference continuation end determination process includes steps S81 to S86.

In step S81, the terminal-side data processing device 34 in the terminal apparatus 3 of the host determines whether or not there is an operation of requesting the end of the conference. In a case where it is determined that the operation has been performed (S81: Yes), the flow proceeds to step S82. On the other hand, in a case where it is determined that the operation has not been performed (S81: No), the conference continuation end determination process ends.

In step S82, the terminal-side data processing device 34 of the terminal apparatus 3 of the host transmits conference end request information indicating a conference end request to the WEB conference server 2.

In step S83, the server-side data processing device 24 of the WEB conference server 2 receives the conference end request information.

In step S84, in response to the reception of the conference end request information by the server-side data processing device 24, the conference management device 21 of the WEB conference server 2 determines the end of the WEB conference being held. In addition, the conference management device 21 ends the conference management process and updates the conference management table T1 by deleting the schedule of the WEB conference being held from the conference management table T1.

In step S85, the server-side data processing device 24 transmits a conference end notification to the terminal apparatuses 3 of all the participants.

In step S86, the terminal-side data processing device 34 in the terminal apparatus 3 of each participant receives the conference end notification, and displays an image or a text notifying the conference end on the screen in cooperation with the display control device 33. As described above, the conference continuation end determination process in step S8 ends.

### «S9: Conference end determination process»

In step S9, conference end determination process is executed. Specifically, the conference management device 21 of the WEB conference server 2 determines whether or not the conference has ended. In a case where it is determined that the conference has ended (S9: Yes), the WEB conference system process ends. On the other hand, in a case where it is determined that the conference has not ended (S9: No), the flow returns to step S4, and the WEB conference system process is continued.

### <Effects of WEB conference system according to first embodiment>

As described above, with the WEB conference system according to the first embodiment, in the video and audio distribution process in step S7, in particular in step S73, the transmission destination of the audio data is determined to be limited to the terminal apparatus whose audio output device being used is the headphone type. Accordingly, since the transmission destination of the audio data having a high possibility of including the confidential information is limited to the terminal apparatus in an environment in which there is a low risk of having the audio heard by an unintended person, it is possible to reduce the risk of the confidential information leakage in the WEB conference.

For example, even in a case where the participant in the WEB conference forgets that the audio output device being used in the terminal apparatus is the built-in speaker and participates in the WEB conference in a public place, there is no concern that the audio is unintentionally output and the confidential information is heard by others. Also, for example, when the participants recognize that the WEB conference system has such a safety function, there is no concern about information leakage, and it is possible to maintain a good state in terms of mental health.

In addition, with the WEB conference system according to the first embodiment, since it is determined whether or not to perform process of limiting the transmission destination of the audio data according to the set "conference security type", it is possible to select whether or not to limit the transmission destination of the audio data in accordance with the level of confidentiality of the WEB conference. For example, in a case where the confidentiality of the WEB conference is low, the transmission destination of the audio data is not limited, so that a load on the participants of the WEB conference can be reduced.

In addition, with the WEB conference system according to the first embodiment, in the terminal apparatus whose "in-use audio output device type" is the speaker type device and which is out of the transmission destination of the audio data, information indicating that the audio distribution is limited to the terminal apparatus whose "in-use audio output device type" is the headphone type device is output. Alternatively, in the terminal apparatus whose "in-use audio output device type" is the speaker type device and which is out of the transmission destination of the audio data, information prompting to switch the audio output device being used to the headphone type device is output. Therefore, it is possible to show the reason why the audio is not output to the participant who uses the terminal apparatus from which the audio is not output due to the limitation of the transmission destination of the audio data, and make the participant understand a measure for outputting the audio.

Hereinafter, WEB conference systems according to other embodiments will be described. The WEB conference systems according to the other embodiments have a hardware configuration and a functional block configuration similar to those of the WEB conference system 1 according to the first embodiment. On the other hand, in the WEB conference systems according to the other embodiments, a part of processes executed by functional blocks and a part of data handled by the functional blocks are different from those of the first embodiment. Thus, in the following embodiments, description of the configurations of the WEB conference systems will be omitted, and differences from the first embodiment in the processes executed by the functional blocks and the data handled by the functional blocks will be mainly described.

### (Second embodiment)

### <Outline of WEB conference system according to second embodiment>

In the first embodiment, it has been described that the items of the "conference security type" of the conference management table and the "classification" and the "individual security type" of the participant management table T2 are set at two levels. In the second embodiment, the items of the "conference security type", the "classification", and the "individual security type" are set at three levels. The functional blocks constituting the WEB conference server 2 and the terminal apparatuses 3 execute the processes corresponding to three levels set in the "conference security type", the "classification", and the "individual security type". Hereinafter, the processes executed by the functional blocks and the data handled by the functional blocks will be described in detail.

### <Functional blocks of WEB conference system according to second embodiment>

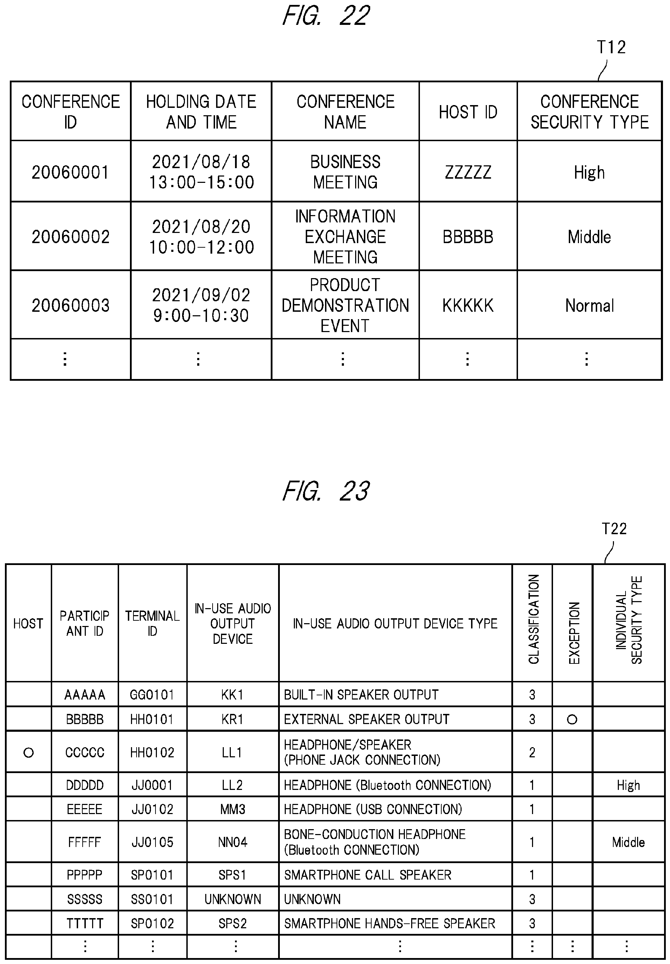

FIG. 22 is a diagram schematically illustrating a conference management table according to the second embodiment. As in a conference management table T12 illustrated in FIG. 22, the "conference security type" is set at three levels of "High", "Middle", and "Normal". In the setting in the "conference security type", "High" corresponds to "high", "Middle" corresponds to "slightly high", and "Normal" corresponds to "normal" as the levels of security required when outputting audio data.

FIG. 23 is a diagram schematically illustrating a participant management table according to the second embodiment. As in a participant management table T22 illustrated in FIG. 23, an item of the "classification" determined in accordance with the audio output device type being used is set at three levels of "1", "2", and "3". In the security level related to the audio output of the audio output device being used, "1" corresponds to "high", "2" corresponds to "normal", and "3" corresponds to "low". The "individual security type" is set at three levels of "High", "Middle", and "Normal". Note that, in the participant management table T22 illustrated in FIG. 23, the display of "Normal" is omitted such that the display of "High" and "Middle" in a field of the "individual security type" can be easily viewed. In the security level required when outputting the audio data, "High" corresponds to "high", "Middle" corresponds to "slightly high", and "Normal" corresponds to "normal".

When the conference management table T1 is set, the conference management device 21 sets the "conference security type" from three levels of "High", "Middle", and "Normal" as options. The "conference security type" is set in accordance with the operation by the host or a person having authority equivalent to the host.

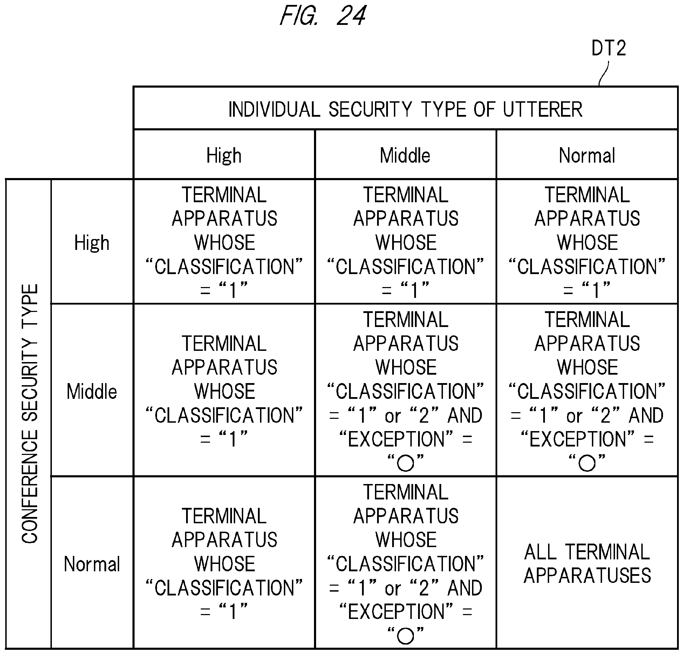

FIG. 24 is a diagram illustrating a table for describing a determination method of a transmission destination of audio data. As understood from an audio data transmission destination determination table DT2 illustrated in FIG. 24, the video and audio distribution control device 23 determines the transmission destination of the audio data based on the setting in the "conference security type" and the setting in the "individual security type" of an utterer.

In a case where the "conference security type" of the conference management table T1 is "High", the video and audio distribution control device 23 limits the transmission destination of the audio data of the utterer to the terminal apparatus 3 whose "classification" of the participant management table T2 is "1".

In addition, in a case where the "conference security type" of the conference management table T1 is "Middle", the video and audio distribution control device 23 limits the transmission destination of the audio data of the utterer to the terminal apparatus 3 whose "classification" of the participant management table T2 is "1" or "2" or whose "exception" is "∘" in principle. However, in a case where the "individual security type" of the utterer is "High", the transmission destination of the audio data of the utterer is limited to the terminal apparatus 3 whose "classification" of the participant management table T2 is "1".

In addition, in a case where the "conference security type" of the conference management table T1 is "Normal", the video and audio distribution control device 23 determines all the terminal apparatuses 3 as the transmission destination of the audio data of the utterer in principle. However, in a case where the "individual security type" of the utterer is "High", the transmission destination of the audio data of the utterer is limited to the terminal apparatus 3 whose "classification" of the participant management table T2 is "1". In addition, in a case where the "individual security type" of the utterer is "Middle", the transmission destination of the audio data of the utterer is limited to the terminal apparatus 3 whose "classification" of the participant management table T2 is "1" or "2" or whose "exception" is "∘".

### <Effects of WEB conference system according to second embodiment>

As described above, with the WEB conference system according to the second embodiment, since the "conference security type", the "classification", and the "individual security type" are set at three levels, it is possible to more finely control the determination of the transmission destination of the audio data.

### (Third embodiment)

### <Outline of WEB conference system according to third embodiment>

In a WEB conference system according to the third embodiment, a WEB conference server acquires device type information indicating types of audio output devices being used in terminal apparatuses 3 from a plurality of terminal apparatuses 3, retains the device type information, and controls a volume of audio from the audio output device being used in each terminal apparatus 3 based on the retained device type information for each terminal apparatus 3.

In the second embodiment, the video and audio distribution control device 23 limits the transmission destination of audio data based on the "conference security type" of the conference management table T1 and the "individual security type", the "classification", and the "exception" of the participant management table T2. On the other hand, in the third embodiment, the video and audio distribution control device 23 determines the terminal apparatus 3 to be a target of volume reduction control to make a volume of output audio smaller than a first volume level set in advance, based on the "conference security type", the "individual security type", the "classification", and the "exception". Note that the first volume level is, for example, a volume level at which the output audio can be heard but cannot be heard clearly unless the user is near the audio output device. For example, in a case where a settable volume level is in a range from 0 to 10, the first volume level may be about 1 to 3. Also, for example, the first volume level may be the level between 40% and 70% of a currently set volume level.

### <Functional blocks and process flow of WEB conference system according to third embodiment>

When the conference management table is set, the conference management device 21 sets the "conference security type" from three levels of "High", "Middle", and "Normal" as options.

In the third embodiment, a content of the video and audio distribution process in step S7 in the WEB conference system process flow illustrated in FIG. 13 is partially different.

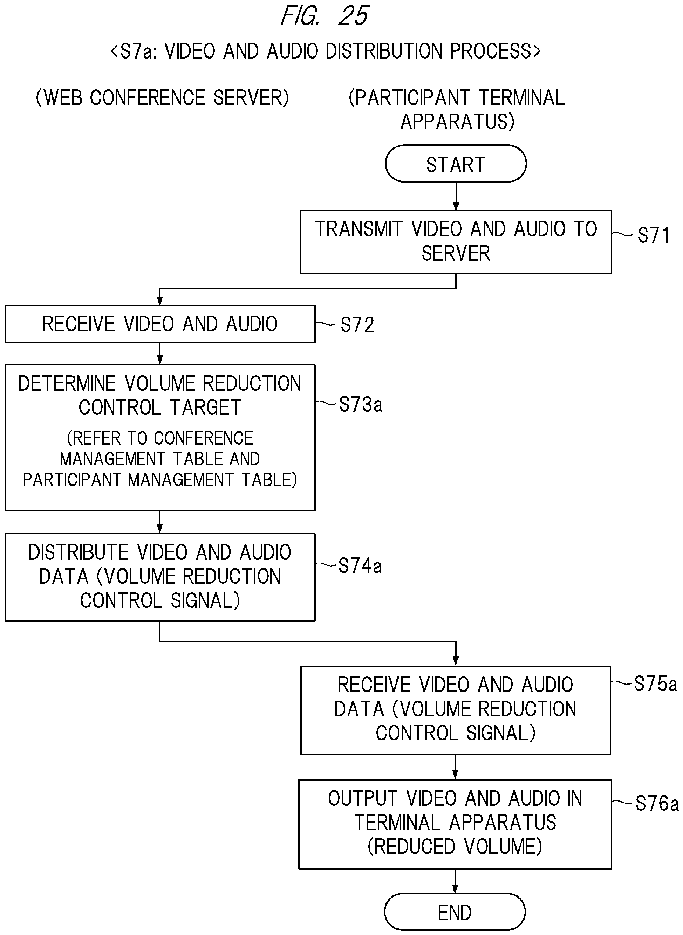

FIG. 25 is a diagram illustrating an example of a flow of the video and audio distribution process according to the third embodiment. As illustrated in FIG. 25, video and audio distribution process in step S7a according to the third embodiment includes steps S71 to S72 and S73a to S76a.

In step S71, the video and audio input and output control device 32 in the terminal apparatus 3 of the utterer converts the audio of the utterer into the audio data via the audio input device such as a microphone and an AD converter, and transmits the audio data to the WEB conference server 2. In addition, the video and audio input and output control device 32 in the terminal apparatus 3 of the video provider converts a video to be provided and shared with the participants, for example, a slide image displayed on the screen of the own terminal apparatus 3 into video data, and transmits the video data to the WEB conference server 2.

In step S72, the video and audio distribution control device 23 of the WEB conference server 2 receives the video data from the terminal apparatus 3 of the video provider, and receives the audio data from the terminal apparatus 3 of the utterer.

In step S73a, the video and audio distribution control device 23 determines the terminal apparatus 3 to be the target of the volume reduction control by referring to the conference management table T1 and the participant management table T2.

In step S74a, the video and audio distribution control device 23 distributes the video data and the audio data to all the terminal apparatuses, and transmits a volume reduction control signal to the terminal apparatus 3 determined as the target of the volume reduction control.

In step S75a, the video and audio input and output control device 32 of each terminal apparatus 3 receives the video data or the audio data distributed from the WEB conference server 2. The terminal apparatus 3 determined as the target of the volume reduction control receives also the volume reduction control signal.

In step S76a, the video and audio input and output control device 32 of each terminal apparatus 3 displays the video indicated by the received video data on the screen in cooperation with the display control device 33. In addition, the video and audio input and output control device 32 of each terminal apparatus 3 controls the audio output device being used to output the audio indicated by the received audio data. The terminal apparatus 3 that has received the volume reduction control signal controls the volume of the output audio based on the volume reduction control signal. As described above, the video and audio distribution process in step S7 ends.

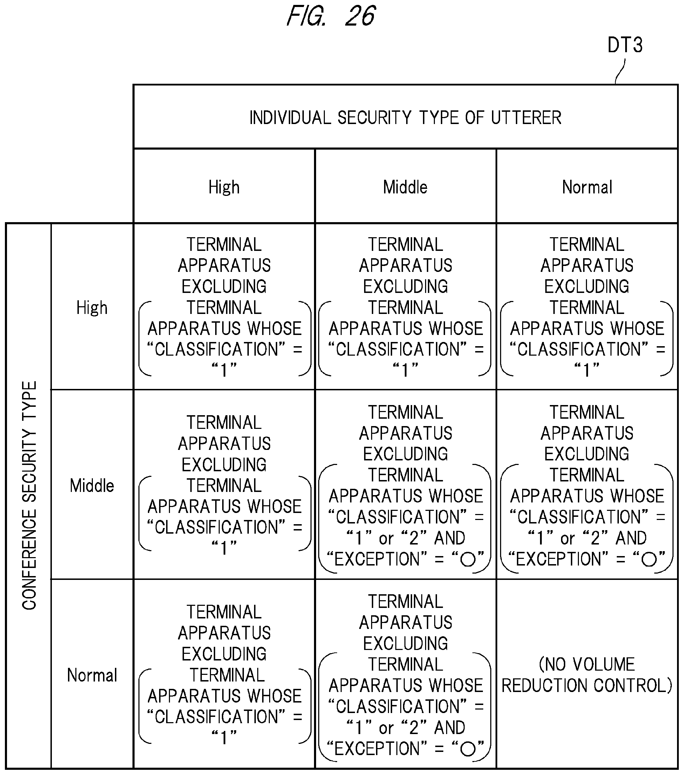

FIG. 26 is a diagram illustrating a table for describing a determination method of the target of the volume reduction control. As understood from an audio data transmission destination determination table DT3 illustrated in FIG. 26, the video and audio distribution control device 23 determines the target of the volume reduction control based on the setting in the "conference security type" and the setting in the "individual security type" of the utterer.

In a case where the "conference security type" of the conference management table T1 (see FIG. 2 as appropriate) is "High", the video and audio distribution control device 23 determines the terminal apparatus 3 other than the terminal apparatus 3 whose "classification" of the participant management table T2 is "1" as the target of the volume reduction control.

In addition, in a case where the "conference security type" of the conference management table T1 is "Middle", the video and audio distribution control device 23 determines the terminal apparatus 3 obtained by excluding the terminal apparatus 3 whose "classification" of the participant management table T2 (see FIG. 2) is "1" or "2" and the terminal apparatus 3 whose "exception" is "o" from all the terminal apparatuses 3 as the target of the volume reduction control in principle. However, in a case where the "individual security type" of the utterer is "High", the video and audio distribution control device 23 determines the terminal apparatus 3 obtained by excluding the terminal apparatus 3 whose "classification" of the participant management table T2 is "1" from all the terminal apparatuses 3 as the target of the volume reduction control.

In addition, in a case where the "conference security type" of the conference management table T1 is "Normal", the video and audio distribution control device 23 does not perform the volume reduction control in principle. However, in a case where the "individual security type" of the utterer is "High", the video and audio distribution control device 23 limits the target of the volume reduction control to the terminal apparatus 3 obtained by excluding the terminal apparatus 3 whose "classification" of the participant management table T2 is "1" from all the terminal apparatuses 3. Also, in a case where the "individual security type" of the utterer is "Middle", the video and audio distribution control device 23 determines the terminal apparatus 3 obtained by excluding the terminal apparatus 3 whose "classification" of the participant management table T2 is "1" or "2" and the terminal apparatus 3 whose "exception" is "o" from all the terminal apparatuses 3 as the target of the volume reduction control.

The video and audio distribution control device 23 transmits the volume reduction control signal for reducing the volume to the terminal apparatus 3 determined as the target of the volume reduction control.

### <Effects of WEB conference system according to third embodiment>

As described above, with the WEB conference system according to the third embodiment, since the terminal apparatus 3 in an audio output state where a risk of confidential information leakage is relatively high is determined as the target of the volume reduction control based on the settings in the "conference security type", the "classification", the "exception", and the "individual security type", it is possible to reduce a risk of having the confidential information heard by an unintended person.

In addition, with the WEB conference system according to the third embodiment, since the audio is output with a small volume in the terminal apparatus 3 in the audio output state where the risk of the confidential information leakage is relatively high, the participant can understand that the own terminal apparatus 3 is in the audio output state where the risk of the confidential information leakage is relatively high.

In addition, with the WEB conference system according to the third embodiment, even in the terminal apparatus 3 in the audio output state where the risk of the confidential information leakage is relatively high, the audio data is distributed, and the audio is output even with a small volume. Therefore, unlike a case where the audio is not output, the participant does not need to doubt the trouble or setting failure of the audio output device, and does not feel anxious.

Note that the volume reduction control may be the control to set the output volume level to 0. In this case, the situation becomes the same as a case where the audio data is not distributed.

### (Fourth embodiment)

### <Outline of WEB conference system according to fourth embodiment>

In the first to third embodiments, the distribution of the audio data is controlled based on the "in-use audio output device type" of the terminal apparatus 3. On the other hand, in the fourth embodiment, an input and output state of the audio of the terminal apparatus 3 is monitored, and the distribution of the audio data is controlled based on the monitoring result.

### <Functional blocks of WEB conference system according to fourth embodiment>

The video and audio distribution control device 23 compares and analyzes audio data picked up by the microphone 3s of each terminal apparatus 3, and determines whether or not the same audios have been received from a plurality of different terminal apparatuses 3. In a case where it is determined that the same audios have been received from the plurality of terminal apparatuses 3 as a result of the analysis, the video and audio distribution control device 23 recognizes that the plurality of terminal apparatuses 3 are installed at places close to each other, and determines that the risk of confidential information leakage to an unintended person is low. Then, the video and audio distribution control device 23 transmits specification information for specifying the plurality of terminal apparatuses 3 to the participant management device 22. The participant management device 22 sets the "classification" of the plurality of terminal apparatuses 3 to "1" based on the received specification information.

### <Effects of WEB conference system according to fourth embodiment>

With the WEB conference system according to the fourth embodiment described above, the audio picked up by the microphone 3s of each terminal apparatus 3 is analyzed to specify the terminal apparatuses 3 set close to each other, the specified terminal apparatuses 3 are determined to have the low risk of the confidential information leakage, and the "classification" of the specified terminal apparatuses is set to "1". Therefore, it is possible to automatically set an appropriate "classification" even though there is no request from the terminal apparatus 3.

Note that, in each of the above-described embodiments, any of the plurality of terminal apparatuses 3 constituting the WEB conference system 1 may also serve as the WEB conference server 2. For example, the WEB conference system 1 may have the configuration in which one terminal apparatus 3 serving also as the WEB conference server 2 and one or more other terminal apparatuses 3 are connected via the network 4.

In the foregoing, each embodiment of the present invention has been described above, but the present invention is not limited to the above-described embodiments and includes various modifications. In addition, the above embodiments have been described in detail in order to make the present invention easily understood, and the present invention is not necessarily limited to those having all the described configurations. Also, part of the configuration of one embodiment may be replaced with the configuration of another embodiment, and the configuration of one embodiment may be added to the configuration of another embodiment. These configurations are all within the scope of the present invention. Furthermore, numerical values, messages, and the like included in the specification and the drawing are merely examples, and the effects of the present invention are not impaired even if different ones are used.

In addition, another configuration may be added to part of the configuration of each embodiment, and part of the configuration of each embodiment may be eliminated or replaced with another configuration. Also, some or all of the above-described configurations, functions, processing units, processing means, and the like may be implemented by hardware, for example, by designing with integrated circuits. In addition, each of the above-described configurations, functions, and the like may be implemented by software by allowing a processor such as an MPU or a CPU to interpret and execute a program for implementing each function. In addition, the range of functions implemented by software is not limited, and hardware and software may be used in combination. Information such as a program, a table, and a file for implementing each function can be stored in a storage such as a memory, a hard disk, and a solid state drive (SSD), or a recording medium such as an IC card, an SD card, and a DVD.

### REFERENCE SIGNS LIST

1 WEB conference system
2 WEB conference server
3 terminal apparatus
4 network
2a, 3a storage
2b, 3b memory
2c, 3c processor
2d, 3d wireless communication unit
2e, 3e wired communication unit
2f, 3f video control unit
2g, 3g audio control unit
2h, 3h operation control unit
2j, 3j power supply control unit
2k, 3k display unit
2m, 3m camera
2n, 3n wireless interface
2p, 3p wired interface
2r, 3r speaker
2s, 3s microphone
2t, 3t operation input unit
2w, 3w power supply interface
3x battery
21 conference management device
22 participant management device
23 video and audio distribution control device
24 server-side data processing device
31 input and output device management device
32 video and audio input and output control device
33 display control device
34 terminal-side data processing device
A1 operating system
A2 WEB conference program
A3 browser
D11, D12, D13 display screen
T1, T11, T12 conference management table
T2, T21, T22 participant management table
T3, T31 input and output device management table
DT1, DT2, DT3 audio data transmission destination determination table

## Claims

1. A WEB conference system comprising:
a server; and
a plurality of terminal apparatuses connected to the server,
wherein the server includes:
a retention device configured to acquire device type information indicating types of audio output devices being used in the terminal apparatuses from the plurality of terminal apparatuses, and retain the device type information; and
a control device configured to determine whether or not audio is output from the audio output device being used in each terminal apparatus or control a volume output from the terminal apparatus based on the device type information for each terminal apparatus retained in the retention device.

2. The WEB conference system according to claim 1,
wherein the control device determines the terminal apparatus to be a transmission destination of audio data in a WEB conference based on the device type information for each terminal apparatus.

3. The WEB conference system according to claim 2,
wherein the control device determines the terminal apparatus whose type of the audio output device being used is a headphone type as the transmission destination of the audio data.

4. The WEB conference system according to claim 3,
wherein the server includes a setting acceptance device configured to accept setting of a secure mode for a WEB conference to be held, and
wherein the control device determines the terminal apparatus whose type of the audio output device being used is the headphone type as the transmission destination of the audio data in the WEB conference in which the secure mode is set.

5. The WEB conference system according to claim 3,
wherein the server includes a request acceptance device configured to accept a secure transmission request from the terminal apparatus, and
wherein the control device determines the terminal apparatus whose type of the audio output device being used is the headphone type as a transmission destination of audio data input from the terminal apparatus whose secure transmission request has been accepted.

6. The WEB conference system according to claim 1,
wherein the control device determines the terminal apparatus controlled such that a volume of audio output from the audio output device being used becomes smaller than a first volume level based on the device type information for each terminal apparatus.

7. The WEB conference system according to claim 1,
wherein the server includes a transmission device configured to transmit the device type information for each terminal apparatus to the plurality of terminal apparatuses, and
wherein the terminal apparatus includes:
a display device; and
a display control device configured to control the display device to display the received device type information for each terminal apparatus.

8. The WEB conference system according to claim 7,
wherein the retention device detects that the type of the audio output device being used in any of the terminal apparatuses is changed, and updates the device type information for each terminal apparatus,
wherein the transmission device transmits the updated device type information for each terminal apparatus, and
wherein the display control device controls the display device to display the updated device type information for each terminal apparatus on a screen.

9. The WEB conference system according to claim 7,
wherein the transmission device transmits participant information indicating a participant who uses the terminal apparatus in each terminal apparatus to the plurality of terminal apparatuses, and
wherein the display control device controls the display device to display the participant information and the device type information in association with each terminal apparatus.

10. The WEB conference system according to claim 9,
wherein the display control device controls the display device to display an icon corresponding to a headphone in a case where the type indicated by the device type information is a headphone type, and to display an icon corresponding to a speaker in a case where the type indicated by the device type information is a speaker type.

11. The WEB conference system according to claim 4,
wherein the terminal apparatus includes:
a display device; and
a display control device, and
wherein the display control device controls the display device to display information indicating that audio is output only to the terminal apparatus whose type of the audio output device being used is the headphone type in the WEB conference in which the secure mode is set.

12. The WEB conference system according to claim 4,
wherein the terminal apparatus includes:
a display device; and
a display control device, and
wherein the display control device controls the display device to display information prompting to switch the type of the audio output device being used to the headphone type in a case where the type of the audio output device being used in the own terminal apparatus is different from the headphone type in the WEB conference in which the secure mode is set.

13. The WEB conference system according to claim 1,
wherein the control device controls the terminal apparatus such that a volume of the audio output from the audio output device becomes smaller than a first volume level in a case where the type of the audio output device being used indicated by the device type information of the terminal apparatus is different from the headphone type.

14. The WEB conference system according to claim 3,
wherein the headphone type device includes a headphone, an earphone, a headset, an earset, a head-mounted display, a bone-conduction speaker, and a phone call speaker of a smartphone.

15. A terminal apparatus connected to a server used in a WEB conference, the terminal apparatus comprising:
one or more audio output devices; and
a control unit configured to control an output of the audio output device,
wherein the control unit controls the audio output device to output audio of the WEB conference based on audio data transmitted from the server in a case where the audio output device being used is a headphone type.

16. The terminal apparatus according to claim 15, further comprising a display device,
wherein the control unit controls the display device to display participant information indicating a participant of the WEB conference and device type information indicating a type of the audio output device being used in the terminal apparatus of the participant in association with each participant based on data output from the server.

17. The terminal apparatus according to claim 15, further comprising a display device,
wherein the control unit controls the display device to display information indicating that audio is output only to a terminal apparatus whose type of the audio output device being used is the headphone type based on a control signal or data output from the server.

18. The terminal apparatus according to claim 15, further comprising a display device,
wherein the control unit controls the display device to display information prompting to switch the audio output device being used to a device of the headphone type in a case where the type of the audio output device being used is different from the headphone type based on a control signal or data output from the server.

19. A WEB conference method in a WEB conference system including a server and a plurality of terminal apparatuses connected to the server, the method comprising:
a retention step in which the server acquires device type information indicating types of audio output devices being used in the terminal apparatuses from the plurality of terminal apparatuses, and retaining the device type information; and
a control step in which the server determines whether or not audio is output from the audio output device being used in each terminal apparatus or controls a volume based on the retained device type information for each terminal apparatus.

20. The WEB conference method according to claim 19,
wherein, in the control step, the terminal apparatus whose type of the audio output device being used is a headphone type is determined as a transmission destination of audio data in the WEB conference.

21. The WEB conference method according to claim 20, further comprising a request acceptance step in which the server accepts a secure transmission request from the terminal apparatus,
wherein, in the control step, the server determines the terminal apparatus whose type of the audio output device being used is the headphone type as a transmission destination of audio data input from the terminal apparatus whose secure transmission request has been accepted.
